# EUROPÄISCHE PATENTSCHRIFT

(11) **EP 4 004 125 B1**
(45) Veröffentlichungstag und Bekanntmachung des Hinweises auf die Patenterteilung: **06.09.2023**
(21) Anmeldenummer: 20737497.6
(22) Anmeldetag: 15.07.2020
(51) Int. Cl.: C09D 5/02, C09D 17/00, C09D 133/14, C09D 175/06, C08F 290/14, C08G 18/08, C08G 18/10, C08G 18/24, C08G 18/32, C08G 18/34, C08G 18/66, C08G 18/42, C08G 18/75, C08G 18/67

(54) **MISCHSYSTEM ZUR HERSTELLUNG VON WÄSSRIGEN ÜBERZUGSMITTELN MIT GERINGEM VOC**
MIXING SYSTEM FOR PREPARING LOW VOC AQUEOUS COATING AGENTS
SYSTÈME DE MÉLANGE DESTINÉ À LA FABRICATION D'AGENTS DE REVÊTEMENT AQUEUX À FAIBLE PART DE COV

(30) Priorität: 31.07.2019 EP 19189323
(43) Veröffentlichungstag der Anmeldung: 01.06.2022
(73) Patentinhaber: BASF Coatings GmbH, 48165 Münster (DE)
(72) Erfinder: STEFFENS, Alexandra, 48165 Muenster (DE); LETTMANN, Bernhard, 48165 Muenster (DE); RADEMACHER, Josef, 48165 Muenster (DE); HOFFMANN, Peter, 48165 Muenster (DE)
(74) Vertreter: BASF IP Association
(86) Internationale Anmeldenummer: PCT/EP2020/070019
(87) Internationale Veröffentlichungsnummer: WO 2021/018594

(56) Entgegenhaltungen:
- EP-A1- 0 438 090
- DE-A1- 4 110 520
- US-A1- 2003 092 833

## Beschreibung

Die vorliegende Erfindung betrifft ein Mischsystem zur Herstellung von wässrigen Überzugsmitteln aus mindestens einer wässrigen Pigmentpaste A, umfassend mindestens ein Farbpigment, und mindestens einer pigmentfreien Komponente B, umfassend eine acrylatbasierte Mikrogel-Dispersion mit einer Glasübergangstemperatur T_{g} von 50 bis 60°C, wobei sowohl die wässrige Pigmentpaste A als auch die Komponente B jeweils einen VOC-Wert von kleiner oder gleich 250 g/L aufweisen.

Weiterhin betrifft die vorliegende Erfindung ein Verfahren zur Herstellung von wässrigen Überzugsmitteln mit einem VOC-Gehalt von 0 bis 250 g/L, insbesondere von 100 bis 250 g/L, bei welchem die einzelnen Komponenten A und B getrennt gelagert und erst kurz vor der Applikation zu dem wässrigen Überzugsmittel vermischt werden.

Schließlich betrifft die vorliegende Erfindung die Verwendung eines erfindungsgemäßen Mischsystems zur Herstellung von wässrigen Überzugsmitteln für die Reparaturlackierung und/oder für die Beschichtung von Automobilkarossen und/oder Kunststoffteilen.

### Stand der Technik

Übliche Verfahren zur Ausbesserung von Schadstellen an einer gegebenenfalls mehrschichtigen Lackierung beinhalten die sorgfältige Reinigung und Schleifen, ggf. Spachteln und Füllern, an der Schadstelle. Danach wird die Schadstelle ggf. nach einer weiteren Vorbehandlung üblicherweise deckend und auslaufend in die angrenzenden Bereiche hinein mit Effektlacken, wie z. B. Metallicbasislacken, oder mit Unilacken gespritzt. Nach Antrocknung des so hergestellten Überzuges werden der Überzug und die angrenzenden Teile mit einem Klarlack überspritzt und nach einer ggf. notwendigen Ablüftzeit wird der Klarlacküberzug gemeinsam mit den vorher aufgebrachten Schichten vorzugsweise bei Temperaturen zwischen 15 und 80°C getrocknet.

Als Effekt-Lacke und/oder im Zweischichtverfahren aufgebrachte Unilacke für das Ausbessern von Schadstellen werden üblicherweise festkörperarme Lacke verwendet, welche neben Bindemitteln farb- und/oder effektgebende Pigmente sowie einen hohen Anteil organischer Lösemittelgemische enthalten.

Der Einsatz der im Bereich der Serienlackierung verwendeten wasserverdünnbaren Systeme im Bereich der Reparaturlackierung ist aufgrund der unterschiedlichen Anforderungen an die Systeme in beiden Bereichen zurzeit nicht möglich. So weisen beispielsweise die für die Serienlackierung (Fahrzeugerstlackierung) verwendeten wasserverdünnbaren Metallic-Basislacke keine für den Bereich der Reparaturlackierung ausreichende Lagerstabilität auf, da bei diesen wasserverdünnbaren Lacken Probleme bei der Gasungsstabilität (Wasserstoffbildung durch Reaktion von Wasser mit der Aluminiumbronze) und/oder Effektstabilität auftreten. Beides beeinträchtigt nachhaltig den Farbton bzw. die Aufsichthelligkeit der resultierenden Beschichtungen. Darüber hinaus enthalten diese Systeme meist Vernetzungsmittel, welche in Systemen für die Reparaturlackierung nicht eingesetzt werden. Daher sind diese Systeme in der Reparaturlackierung nicht zum Einsatz gekommen.

Aus wirtschaftlichen Gründen, zur Verbesserung der Arbeitssicherheit (Brandschutz) und zur Verringerung der Umweltbelastung beim Trocknen der Lackfilme ist man auch im Bereich der Reparaturlackierung bemüht, neue Beschichtungsmittel zur Verfügung zu stellen, welche einen im Vergleich zum Stand der Technik niedrigeren VOC (volatile organic content) aufweisen, so dass bei der Herstellung entsprechender Mehrschichtlackierungen weniger VOC-Emissionen auftreten und damit die Herstellung umweltfreundlicher gestaltet werden kann.

Eine Senkung des VOC-Gehalts kann zum einen durch Erhöhung des Festkörpers der Beschichtungsmittel erreicht werden. Durch den Wechsel von Medium-Solid-Basislack-Systemen mit einem Festkörperanteil zwischen 20-30 % zu sogenannten High-Solid-Basislack-Systemen mit einem Festkörperanteil größer 35 % im applikationsfähigen Zustand (Spritzviskosität) kann eine signifikante VOC-Reduktion beim Verarbeitungsprozess erreicht. Ähnliches gilt für den Einsatz von High-Solid-Klarlacken (Klarlacke mit hohem Festkörper von bis zu 45 % oder höher bei Spritzviskosität).

Zum anderen kann eine Senkung des VOC-Gehalts durch den Einsatz wässriger Komponenten zur Herstellung des Überzugs- bzw. Beschichtungsmittels erreicht werden.

Neben dem Aspekt der Umweltfreundlichkeit ist es von zentraler Bedeutung, dass gleichzeitig andere technologische Eigenschaften und auch die ästhetischen Eigenschaften von Beschichtungsmitteln sowie von daraus hergestellten Mehrschichtlackierungen erhalten bleiben. So soll das Lackierergebnis optisch und technologisch mit einer eingebrannten Erstlackierung, trotz wesentlicher Unterschiede in den Rahmenbedingungen, vergleichbar sein.

Gerade im Bereich der Autoreparaturlackierung ist es bei der Ausbesserung von Schadstellen wichtig, dass die zur Ausbesserung eingesetzten Beschichtungsmittel die gleichen oder zumindest annährend gleiche Farbtöne aufweisen wie die Beschichtung aus der OEM-Serienlackierung, damit nach der Reparatur nicht erkennbar ist, dass eine Ausbesserung überhaupt stattgefunden hat.

Es besteht zwar prinzipiell die Möglichkeit, dass die entsprechenden Beschichtungsmittel direkt bereits vom Lackhersteller im gewünschten Farbton geliefert werden. Nachteilig daran ist jedoch, dass davon oftmals jeweils nur geringe Mengen für die Ausbesserung erforderlich sind, die entsprechenden fertigen Beschichtungsmittel jedoch oftmals zumindest nicht über einen langen Zeitraum wie beispielsweise einem Zeitraum von mehr als 12 Monaten lagerstabil sind. Aus ökonomischen Gründen ist eine solche Vorgehensweise nachteilig.

Es hat sich daher gezeigt, dass die individuelle Herstellung von Beschichtungsmitteln gerade im Bereich der Autoreparaturlackierung vorteilhaft ist. Zu diesem Zweck werden entsprechende Mischsysteme umfassend verschiedene Komponenten zur Verfügung gestellt, die je nach Anforderung individuell miteinander vermischt werden, um das entsprechende Beschichtungsmittel herzustellen. Diese Herstellung aus einem Mischsystem hat den Vorteil, dass nicht jeder Farbton einzeln hergestellt und bevorratet werden muss und dass somit Produktions-, Distributions- und Lagerhaltungskosten gesenkt werden können. Dabei ist es essentiell, dass die Komponenten des Mischsystems eine ausreichende Lagerstabilität (mindestens 12 Monate) aufweisen.

Aus der Offenlegungsschrift DE 41 10 520 A1 ist ein Mischsystem bekannt, welches verschiedene wasserfreie Basisfarben A und mindestens eine wasserenthaltende pigmentfreien Komponente B umfassen. Zwar kann hierdurch der VOC-Gehalt der aus diesem Mischsystem hergestellten Überzugsmittel verringert werden, jedoch weist der spritzfertige Lack weiterhin einen sehr hohen VOC-Gehalt von 319 bis 420 g/L auf.

Die Offenlegungsschrift EP 1 183 313 A1 offenbart ein Mischsystem, in welchem das Effektpigment in einer wasserfreien Basisfarbe enthalten ist. Dieses Mischsystem enthält zudem noch wässrige Basisfarben mit Farbpigmenten sowie einen wässrigen Mischlack. Auch hier weist die wasserfreie Basisfarbe, umfassend Effektpigmente, einen sehr hohen VOC-Gehalt auf.

Aus den Offenlegungsschriften EP 0 608 773 A1, EP 0 706 543 A1 und EP 0 614 951 A1 sind jeweils Modulsysteme bekannt, welche ein Farbmodul, das mindestens 20 Gew.-% Wasser enthält, und einen wässrigen pigmentfreien Mischlack aufweisen. Auch dieses Farbmodul weist noch einen relativ hohen Lösemittelgehalt auf.

Weiterhin werden in der Offenlegungsschrift EP 0 468 293 A1 wässrige Lacke auf Basis von verschiedenen Bausteinen beschrieben. Es ist jedoch erforderlich, dass der Effektbaustein wasserfrei ist. Daher weist auch das anwendungsfertige Überzugsmittel immer noch einen recht hohen VOC-Gehalt von 330 bis 340 g/L auf.

### Aufgabe und Lösung

Aufgabe der vorliegenden Erfindung war es demzufolge, ein Mischsystem bereitzustellen, wobei alle Komponenten des Mischsystems einen VOC-Gehalt von höchstens 250 g/L aufweisen. Insbesondere sollte dieses Mischsystem die Herstellung wässriger Überzugsmittel ermöglichen, welche für die Reparaturlackierung, insbesondere von Schadstellen an Automobilkarossen, geeignet sind. Dabei sollte eine hohe Farbtongenauigkeit der wässrigen Überzugsmittel gewährleistet sein, um so die gewünschten Farbtöne ohne aufwendige Maßnahmen beim Lackierer möglichst exakt und reproduzierbar einstellen zu können. Dies bedeutet, dass die für den Aufbau dieses Mischsystem verwendeten wässrigen Pigmentpasten eine sehr gute Lagerstabilität (> 24 Monate) aufweisen müssen.

Gleichzeitig sollen die übrigen Eigenschaften der Beschichtung, wie beispielsweise die Haftung auf der Originallackierung, nicht negativ beeinflusst werden. Die Haftungsproblematik ist insbesondere dann eklatant, wenn die beschichteten Substrate der Witterung ausgesetzt sind. Daher sollten die wässrigen Überzugsmittel, auch nachdem sie der Witterung ausgesetzt waren, noch hervorragende Haftungseigenschaften besitzen. Insbesondere sollten weder Blasen noch Quellungen auftreten.

### Lösung der Aufgabe

Die vorstehend beschriebenen Aufgaben werden gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein Mischsystem zur Herstellung von wässrigen Überzugsmitteln, enthaltend
(a) mindestens eine wässrige Pigmentpaste A, umfassend mindestens ein Farbpigment (a-1) sowie mindestens ein anionisch stabilisiertes Bindemittel (a-2) und/oder mindestens ein nichtionisch stabilisiertes Bindemittel (a-3) und
(b) mindestens eine pigmentfreie Komponente B, umfassend mindestens eine acrylatbasierte Mikrogel-Dispersion (b-1), wobei das acrylatbasierte Mikrogel eine Glasübergangstemperatur T_{g} von 50 bis 60°C aufweist,
wobei die wässrige Pigmentpaste A und die pigmentfreie Komponente B jeweils einen VOC-Wert von kleiner oder gleich 250 g/L aufweisen.

Der VOC-Wert ist hierbei wie folgt definiert: VOC (g/L) = (Gesamtgewicht der flüchtigen Bestandteile (g) - Gesamtgewicht Wasser (g)) / (Volumen Überzugsmittel (L) - Volumen Wasser (L)). Unter flüchtigen Bestandteilen werden vorliegend Verbindungen verstanden, welche bei Verarbeitungstemperatur, insbesondere bei 20°C, einen Dampfdruck von mehr als 10 Pascal aufweisen (vgl. 31. BlmSchV sowie entsprechende VOC-Richtlinien und VOC-Verordnungen der EU). Zudem werden unter flüchtigen Bestandteilen organischen Verbindungen verstanden, welche einen Siedebeginn von weniger oder gleich 250 °C bei einem Standarddruck von 101,3 kPa aufweisen (vgl. Richtlinie 2004/42/EG des Europäischen Parlaments und des Rates).

Weiterhin ist Gegenstand der vorliegenden Erfindung ein Verfahren zur Herstellung von wässrigen Überzugsmitteln mit einem VOC-Gehalt von 0 bis 250 g/L, insbesondere von 100 bis 250 g/L, durch Vermischen von mindestens zwei wässrigen Komponenten, dadurch gekennzeichnet, dass ein erfindungsgemäßes Mischsystem eingesetzt wird und die wässrigen Überzugsmittel durch Mischen der Pigmentpaste A mit der pigmentfreien Komponente B und gegebenenfalls der Komponente C hergestellt werden.

Zudem betrifft die vorliegende Erfindung die Verwendung eines erfindungsgemäßen Mischsystems zur Herstellung von wässrigen Überzugsmitteln für die Reparaturlackierung und/oder für die Beschichtung von Automobilkarossen und/oder Kunststoffteilen.

Sowohl die einzelnen Komponenten des erfindungsgemäßen Mischsystems als auch die aus dem erfindungsgemäßen Mischsystem herstellbaren wässrigen Überzugsmittel weisen jeweils einen VOC-Gehalt von höchstens 250 g/L auf. Um derartige VOC-Gehalte zu erreichen, enthalten die Komponenten des erfindungsgemäßen Mischsystems als Lösemittel überwiegend Wasser, so dass organische Lösemittel nur noch in geringen Mengen enthalten sind. Neben wirtschaftlichen Vorteilen führt dieser reduzierte Lösemittelanteil zur Verbesserung der Arbeitssicherheit (Brandschutz) und zur Verringerung der Umweltbelastung beim Trocknen der Lackfilme.

Trotz des geringen VOC-Gehalts zeigen die einzelnen Komponenten des erfindungsgemäßen Mischsystems eine ausgezeichnete Lagerstabilität. Zudem wird eine hohe Farbtongenauigkeit erreicht. Weiterhin zeigen die wässrigen Überzugsmittel einen guten Verlauf, eine gute Spritznebelaufnahme sowie eine gute Abdeckung. Darüber hinaus weisen Mehrschichtlackierungen, welche aus den wässrigen Überzugsmitteln hergestellt wurden, hervorragende mechanische Eigenschaften, insbesondere eine gute Haftung auf der Originallackierung sowie eine hohe Schwitzwasserbeständigkeit und Steinschlaghaftung, auf.

### Ausführliche Beschreibung

Das erfindungsgemäße Mischsystem enthält mindestens die Komponenten (a) und (b). Unter Komponente werden hier lagerstabile, getrennt lagerbare Bausteine (Mischbausteine) verstanden, aus denen durch Mischen ein fertiges wässriges Überzugsmittel hergestellt wird, das gegebenenfalls noch auf Applikationsviskosität eingestellt werden kann. Durch das Vermischen der einzelnen Komponenten können gewünschte abstimmbare Farbtönungen erhalten werden. Die Komponenten können dem Anwender beispielsweise in Form eines zumindest die Komponenten (a) und (b) enthaltenden Baukastens bereitgestellt werden.

Von jeder der Komponenten (a) und (b) können verschiedene Ausführungsformen bereitgestellt werden. Auf diese Weise entstehen Reihen, welche aus einer oder mehrerer Ausführungsformen der Komponenten (a) und (b) bestehen können. Besonders bevorzugt werden von der Komponente (a) 1 bis 100 verschiedene Ausführungsformen und von der Komponente (b) 1 bis 6 verschiedene Ausführungsformen bereitgestellt.

Darüber hinaus kann es im Rahmen der vorliegenden Erfindung auch vorgesehen sein, dass das erfindungsgemäße Mischsystem weitere Komponenten enthält. Derartige Ausführungsformen werden im Anschluss an die Beschreibung der Komponenten (a) und (b) aufgeführt.

### Komponente (a)

Bei der Komponente (a) handelt es sich um eine wässrige Pigmentpaste A, umfassend mindestens ein Farbpigment (a-1) sowie mindestens ein anionisch stabilisiertes Bindemittel (a-2) und/oder mindestens ein nichtionisch stabilisiertes Bindemittel (a-3). Die Pigmentpaste A weist einen VOC-Gehalt von weniger oder gleich 250 g/L auf.

Der Ausdruck "wässrige Pigmentpaste" ist dem Fachmann bekannt. Gemeint ist grundsätzlich eine Pigmentpaste, welche nicht ausschließlich auf organischen Lösemitteln basiert. Denn eine solche auf organischen Lösemitteln basierende Pigmentpaste enthält ausschließlich organische Lösemittel und kein Wasser zum Lösen und/oder Dispergieren der Komponenten beziehungsweise ist eine Paste, bei deren Herstellung nicht explizit Wasser zugegeben wird, sondern Wasser nur in Form von Verunreinigung, Luftfeuchtigkeit und/oder als Lösemittel für gegebenenfalls eingesetzten spezielle Additive in die Paste gelangt. Eine solche Paste wäre - im Gegensatz zu einer wässrigen Pigmentpaste - als lösemittelbasiert beziehungsweise als "auf organischen Lösemitteln basierend" zu bezeichnen. Bevorzugt ist "wässrig" im Rahmen der vorliegenden Erfindung so zu verstehen, dass die jeweilige Pigmentpaste einen Anteil von mindestens 20 Gew.-%, bevorzugt mindestens 25 Gew.-%, ganz besonders bevorzugt mindestens 30 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 60 bis 100 Gew.-%, insbesondere 70 bis 98 Gew.-%, ganz besonders bevorzugt 75 bis 95 Gew.-%, jeweils bezogen auf die Gesamtmenge der enthaltenen Lösemittel.

In Bezug auf den Begriff "Bindemittel" wird auf Römpp Lexikon Lacke und Druckfarben, Georg Thieme Verlag, Stuttgart, New York, 1998, Seiten 73 und 74, "Bindemittel", verwiesen.

Zur Erhöhung der Dispergierbarkeit in wässrigem Medium enthält das Bindemittel (a-2) bestimmte Gruppen, welche durch Neutralisationsmittel in anionische Gruppen überführt werden können (potentiell anionische Gruppen), und das Bindemittel (a-3) bestimmte nichtionische Gruppen. Diese Bindemittel werden im Rahmen der vorliegenden Erfindung als anionisch stabilisierte Bindemittel (a-2) bzw. nichtionisch stabilisierte Bindemittel (a-3) bezeichnet. Bei den anionischen Gruppen, welche durch Neutralisationsmittel in anionische Gruppen überführt werden können, handelt es sich beispielsweise um Carbonsäure-, Sulfonsäure- und/oder Phosphonsäuregruppen, insbesondere Carbonsäuregruppen. Gruppen zur nichtionischen Stabilisierung sind vorzugsweise Poly(oxyalkylen)-Gruppen, insbesondere Poly(oxyethylen)- und/oder Poly(oxypropylen)-Gruppen.

### Farbpigment (a-1):

Ein Fachmann ist mit dem Begriff der Farbpigmente vertraut. Die Begriffe "farbgebendes Pigment" und "Farbpigment" sind im Sinne der vorliegenden Erfindung austauschbar. Eine entsprechende Definition der Pigmente und weitere Spezifizierungen davon ist in der DIN 55943 (Datum: Oktober 2001 ) geregelt.

Das Farbpigment ist bevorzugt ausgewählt aus der Gruppe von anorganischen und/oder organischen Farbpigmenten und/oder Füllstoffen.

Besonders bevorzugt eingesetzte organische Farbpigmente sind ausgewählt aus der Gruppe von (i) Monoazopigmenten, wie C.I. Pigment Brown 25, C.I. Pigment Orange 5, 36 und 67, C.I. Pigment Orange 5, 36 und 67, C.I. Pigment Red 3, 48:2, 48:3, 48:4, 52:2, 63, 112 und 170 sowie C.I. Pigment Yellow 3, 74, 151 und 183; (ii) Disazopigmenten, wie C.I. Pigment Red 144, 166, 214 und 242, C.I. Pigment Red 144, 166, 214 und 242 sowie C.I. Pigment Yellow 83; (iii) Anthrachinonpigmenten, wie C.I. Pigment Yellow 147 und 177 sowie C.I. Pigment Violet 31; (iv) Benzimidazolpigmenten, wie C.I. Pigment Orange 64; (v) Chinacridonpigmenten, wie C.I. Pigment Orange 48 und 49, C.I. Pigment Red 122, 202 und 206 sowie C.I. Pigment Violet 19; (vi) Chinophthalonpigmenten, wie C.I. Pigment Yellow 138; (vii) Diketopyrrolopyrrolpigmenten, wie C.I. Pigment Orange 71 und 73 sowie C.I. Pigment Red, 254, 255, 264 und 270; (viii) Dioxazinpigmenten, wie C.I. Pigment Violet 23 und 37; (ix) Indanthronpigmenten, wie C.I. Pigment Blue 60; (x) Isoindolinpigmenten, wie C.I. Pigment Yellow 139 und 185; (xi) Isoindolinonpigmenten, wie C.I. Pigment Orange 61 sowie C.I. Pigment Yellow 109 und 110; (xii) Metallkomplexpigmente, wie C.I. Pigment Yellow 153; (xiii) Perinonpigmenten, wie C.I. Pigment Orange 43; (xiv) Perylenpigmenten, wie C.I. Pigment Black 32, C.I. Pigment Red 149, 178 und 179 sowie C.I. Pigment Violet 29; (xv) Phthalocyaninpigmenten, wie C.I. Pigment Violet 29, C.I. Pigment Blue 15, 15:1, 15:2, 15:3, 15:4, 15:6 und 16 sowie C.I. Pigment Green 7 und 36; (xvi) Anilinschwarz, wie C.I. Pigment Black 1; (xvii) Azomethinpigmenten; sowie (xviii) deren Mischungen.

Besonders bevorzugt eingesetzte anorganische Farbpigmente sind ausgewählt aus der Gruppe von (i) Weißpigmenten, wie Titandioxid (C.I. Pigment White 6), Zinkweiß, Farbenzinkoxid, Zinksulfid, Lithopone; (ii) Schwarzpigmenten, wie Eisenoxidschwarz (C.I. Pigment Black 11), Eisen-Mangan-Schwarz, Spinellschwarz (C.I. Pigment Black 27), Ruß (C.I. Pigment Black 7); (iii) Buntpigmenten, wie Ultramaringrün, Ultramarinblau, Manganblau, Ultramarinviolett, Manganviolett, Eisenoxidrot (C.I. Pigment Red 101), Molybdatrot (C.I. Pigment Red 104), Ultramarinrot, Eisenoxidbraun, Mischbraun, Spinell- und Korundphasen (C.I. Pigment Brown 24, 29 und 31), Eisenoxidgelb (C.I. Pigment Yellow 42), Bismutvanadat (C.I. Pigment Yellow 184); sowie (iv) deren Mischungen.

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Bevorzugt wird das Farbpigment (a-1) in bestimmten Gesamtmengen eingesetzt. Besonders bevorzugt enthält die wässrige Pigmentpaste A das mindestens eine Farbpigment (a-1) in einer Gesamtmenge von 0,08 bis 50 Gew.-%, vorzugsweise von 2,5 bis 47 Gew.-%, bezogen auf das Gesamtgewicht der wässrigen Pigmentpaste A.

Neben dem mindestens einem Farbpigment (a-1) können die wässrigen Pigmentpasten A weiterhin mindestens ein Effektpigment enthalten. Als Effektpigmente dienen solche Pigmente, welche einen dekorativen Effekt in Lacküberzügen bewirken und zusätzlich, jedoch nicht ausschließlich, einen farbgebenden Effekt bewirken können. Die Effektpigmente zeichnen sich insbesondere durch einen plättchenartigen Aufbau aus. Solche Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben.

Bevorzugte Effektpigmente sind beispielsweise plättchenförmige Metalleffektpigmente wie plättchenförmige Aluminiumpigmente, Goldbronzen, feuergefärbte Bronzen und/oder Eisenoxid-Aluminiumpigmente, Perglanzpigmente und/oder Metalloxid-Glimmer-Pigmente und/oder sonstige Effektpigmente wie plättchenförmiges Graphit, plättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere plättchenförmige Aluminiumpigmente und/oder beschichtete Metalloxid-Glimmer-Pigmente.

Im Handel ist eine Vielzahl dieser Effektpigmente erhältlich, die sich durch Teilchengröße, Teilchengrößenverteilung und Teilchenform unterscheiden. Je nach gewünschtem Effekt im Lackfilm wird die Auswahl der Pigmente getroffen. Im Rahmen der vorliegenden Erfindung ist es möglich, dass die wässrigen Pigmentpasten nur ein Effektpigment (a-1) oder aber eine Mischung an verschiedenen Effektpigmenten (a-1) enthalten.

Erfindungsgemäß bevorzugt enthalten die wässrigen Pigmentpasten A jedoch 0 Gew.-%, bezogen auf das Gesamtgewicht der wässrigen Pigmentpaste A, an Effektpigmenten.

### Bindemittel:

Die wässrige Pigmentpaste A enthält mindestens ein anionisch stabilisiertes Bindemittel (a-2) und/oder mindestens ein nichtionisch stabilisiertes Bindemittel (a-3). Bevorzugt sind diese in einer bestimmten Gesamtmenge enthalten. Vorzugsweise enthält die wässrige Pigmentpaste das mindestens eine anionisch stabilisierte Bindemittel (a-2) und/oder das mindestens eine nichtionisch stabilisierte Bindemittel (a-3), insbesondere eine Mischung aus dem nachfolgend beschriebenen anionisch stabilisierten Bindemittel (a-2) und dem nachfolgend beschriebenen nichtionisch stabilisierten Bindemittel (a-3), in einer Gesamtmenge von 5 bis 35 Gew.-%, vorzugsweise von 7 bis 30 Gew.-%, insbesondere von 9 bis 25 Gew.-%, jeweils bezogen auf das Gesamtgewicht der wässrigen Pigmentpaste A. Ist mehr als ein anionisch stabilisiertes Bindemittel (a-2) und/oder ein nichtionisch stabilisiertes Bindemittel (a-3) enthalten, beziehen sich diese Gesamtmengen auf die Summe der Menge aller eingesetzten anionisch und nichtionisch stabilisierten Bindemittel. Die zuvor angeführten Gesamtmengen erlauben eine stabile Dispergierung des Farbpigments (a-1) und ggf. weiterer Effektpigmente, so dass eine hohe Lagerstabilität der wässrigen Pigmentpaste A erreicht wird. Zudem führen diese Bindemittel zu einer hohen mechanischen Stabilität der aus diesen Pasten herstellten wässrigen Überzugsmittel. Darüber hinaus gewährleisten diese Bindemittel eine hohe Tau-Gefrier-Stabilität der wässrigen Pigmentpaste A.

### Anionisch stabilisiertes Bindemittel (a-2):

Erfindungsgemäß bevorzugt werden bestimmte anionisch stabilisierte Bindemittel (a-2) eingesetzt. Um den zuvor beschriebenen geringen VOC-Gehalt der wässrigen Pigmentpaste A zu erreichen werden besonders bevorzugt in Wasser dispergierte anionisch stabilisierte Bindemittel eingesetzt.

Eine bevorzugte Ausführungsform des ersten Erfindungsgegenstands ist daher dadurch gekennzeichnet, dass das anionisch stabilisierte Bindemittel (a-2) der Pigmentpaste A ein in Wasser dispergiertes anionisch stabilisiertes Polyurethanpolymer ist, wobei das anionisch stabilisierte Polyurethanpolymer eine Säurezahl von 20 bis 40 mg KOH/g, bezogen auf den Feststoffgehalt, aufweist, wobei die Dispersion einen pH-Wert von 7,0 bis 8,0 aufweist und wobei die Dispersion ein Polyol, insbesondere Polypropylenglycol, mit einer mittleren Molmasse Mₙ von 500 bis 1.500 Da enthält.

Die anionisch stabilisierten Polyurethanpolymere sind erhältlich durch Umsetzung eines isocyanatgruppenhaltigen Präpolymers mit gegenüber Isocyanatgruppen reaktiven Verbindungen, wie beispielsweise in der Offenlegungsschrift DE 199 21 457 A1 beschrieben. Die Umsetzung der Komponenten erfolgt dabei nach den gut bekannten Verfahren der organischen Chemie (vgl. z. B. Kunststoff-Handbuch, Band 7: Polyurethane, herausgegeben von Dr. Y. Oertel, Carl Hanser Verlag, München, Wien 1983).

Die Umsetzung der Komponenten erfolgt bevorzugt in den üblichen und bekannten organischen Lösemitteln. Die Menge an organischen Lösemitteln kann dabei in weiten Grenzen variieren und sollte zur Bildung einer Präpolymerlösung mit geeigneter Viskosität ausreichen. Im Allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10-15 Gew.-%, bezogen auf den Festkörper, durchgeführt werden.

Die Umsetzung der Komponenten kann gegebenenfalls in Gegenwart eines Katalysators, wie Organozinnverbindungen und/oder tertiären Aminen, erfolgen.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150°C, bevorzugt 50 bis 130°C, in organischen Lösemitteln, die nicht mit Isocyanaten reagieren können, erfolgen. Das Äquivalentverhältnis von NCO- zu OH-Gruppen liegt zwischen 2,0 : 1,0 und > 1,0 : 1,0, bevorzugt zwischen 1,4 : 1 und 1,1 : 1.

Die zur Herstellung des NCO-Präpolymeren eingesetzten Polyole können niedermolekular und/oder hochmolekular sein und enthalten mindestens eine anionische bzw. zur Anionenbildung befähigte Gruppe. Es können auch niedermolekulare Polyole mit einem Molekulargewicht von 60 bis zu 400 Dalton, zur Herstellung der isocyanatgruppenhaltigen Präpolymere mitverwendet werden.

Um ein NCO-Präpolymer mit hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern mit einer zahlenmittleren Molekulargewicht Mₙ von 400 bis 5000 Dalton bestehen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Besonders bevorzugt wird ein linearer Polyester eingesetzt, welcher durch Umsetzung von aliphatischen und aromatischen Dicarbonsäuren mit aliphatischen Diolen erhältlich ist.

Neben dem Polyester werden zur Herstellung des NCO-Präpolymers weitere Polyole eingesetzt, wobei mindestens ein Polyol eine Carboxyl-, Sulfonsäure- und/oder Phosphonsäuregruppen aufweist. Vorzugsweise werden Alkansäuren mit zwei Hydroxylgruppen am alpha-ständigen Kohlenstoffatom eingesetzt. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteils im NCO-Präpolymeren ausmachen.

Die durch die Carboxylgruppenneutralisation in Salzform verfügbare Menge an ionisierbaren Carboxylgruppen beträgt wenigstens 0,4 Gew.-%, vorzugsweise wenigstens 0,7 Gew.-%, bezogen auf den Feststoff des NCO-Präpolymers. Die obere Grenze beträgt etwa 12 Gew.-%. Die Menge an Dihydroxyalkansäuren im unneutralisierten Präpolymer ergibt eine Säurezahl von 10 mg KOH/g bis 40 mg KOH/g.

Weitere Polyole, welche keine Carboxyl-, Sulfonsäure- und/oder Phosphonsäuregruppen aufweisen, sind bevorzugt ausgewählt aus Diolen der Formel (1) 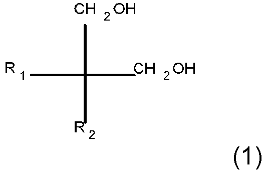 worin R₁ und R₂ jeweils einen gleichen oder verschiedenen Rest darstellen und für einen Alkylrest mit 1 bis 18 C-Atomen, einen Arylrest oder einen cycloaliphatischen Rest stehen.

Besonders bevorzugte Diole der Formel (1) sind Diole, in welchen R₁ und R₂ jeweils für einen Methylrest stehen.

Die Diole der Formel (1) werden üblicherweise in einer Menge von 0,5 bis 15 Gew.-%, bevorzugt 1 bis 7 Gew.-% eingesetzt, jeweils bezogen auf das Gesamtgewicht der zur Herstellung der anionisch stabilisierten Polyurethanpolymere eingesetzten Aufbaukomponenten.

Als typische multifunktionelle Isocyanate zur Herstellung der anionisch stabilisierten Polyurethanpolymere werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren eingesetzte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat, Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher anionisch stabilisierter Polyurethanpolymerdispersionen werden insbesondere Diisocyanate der allgemeinen Formel (2) eingesetzt, 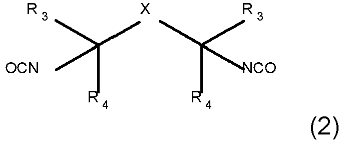 wobei X für einen zweiwertigen cyclischen und gegebenenfalls aromatischen Kohlenwasserstoffrest, vorzugsweise für einen ggf. Halogen-, Methyl- oder Methoxysubstituierten Dicyclohexylmethyl-, Naphthylen-, Diphenylen- oder 1,2-, 1,3- oder 1,4-Phenylenrest, besonders bevorzugt für einen Dicyclohexylmethylrest und R₃ und R₄ für Wasserstoff oder einen Alkylrest mit 1-4 C-Atomen, bevorzugt für Wasserstoff, stehen. Ein im Rahmen der vorliegenden Erfindung besonders bevorzugt eingesetztes Diisocyanat der Formel (2) ist 4,4'-Methylendicyclohexyldiisocyanat (auch als H₁₂MDI bezeichnet).

Das NCO-Präpolymer enthält wenigstens 0,5 Gew.-% Isocyanatgruppen, vorzugsweise wenigstens 1 Gew.-% NCO, bezogen auf den Feststoff. Die obere Grenze liegt bei 15 Gew.-%, vorzugsweise 10 Gew.-%, besonders bevorzugt bei 5 Gew.-% NCO.

Die Isocyanatgruppen des isocyanatgruppenhaltigen Präpolymers werden mit einem Modifizierungsmittel oder Kettenverlängerungsmittel umgesetzt. Das Modifizierungsmittel wird dabei vorzugsweise in einer solchen Menge zugegeben, dass es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfunktionelle Polyamine und/oder Polyole, eingesetzt. Als Beispiele für einsetzbare Polyamine werden Ethylendiamin, Trimethylendiamin, Tetramethylendiamin, Pentamethylendiamin, Hexamethylendiamin oder Diethylentriamin genannt. Als Beispiele für einsetzbare Polyole werden Trimethylolpropan, 1,3,4-Butantriol, Glycerin, Erythrit, Mesoerythrit, Arabit, Adonit usw. genannt. Bevorzugt wird Trimethylolpropan eingesetzt. Das Äquivalentverhältnis des Präpolymers zu dem Modifizierungsmittel liegt bevorzugt zwischen 2,0 : 1,0 und 1,0 : 2,0, insbesondere zwischen 1,1 : 1 und 1 : 1,1.

Im Rahmen der vorliegenden Erfindung ist das anionisch stabilisierte Polyurethanpolymer besonders bevorzugt erhältlich durch Umsetzung eines NCO-Präpolymers mit einem Modifizierungsmittel in Form eines Polyols, insbesondere Trimethylolpropan, wobei das NCO-Präpolymer erhältlich ist durch Umsetzung von
(i) 55 bis 70 Gew.-%, bezogen auf das Gesamtgewicht der Verbindungen (i) bis (iv), mindestens eines Polyesterpolyols mit einer OH-Zahl von 40 bis 100 mg KOH/g, bezogen auf den Feststoffgehalt, und einem zahlenmittleren Molekulargewicht Mₙ von 1000 bis 3000 Da, wobei das Polyesterpolyol bevorzugt keine olefinischen Doppelbindungen enthält,
(ii) 3 bis 7 Gew.-%, bezogen auf das Gesamtgewicht der Verbindungen (i) bis (iv), mindestens einer Alkansäure mit 3 bis 8 Kohlenstoffatomen sowie zwei Hydroxylgruppen am alpha-ständigen Kohlenstoffatom, insbesondere Dimethylolpropionsäure,
(iii) 0,5 bis 3 Gew.-%, bezogen auf das Gesamtgewicht der Verbindungen (i) bis (iv), mindestens einem Polyol der Formel (1) mit R₁ = R₂ = Methyl und
(iv) 25 bis 30 Gew.-%, bezogen auf das Gesamtgewicht der Verbindungen (i) bis (iv), mindestens einem Diisocyanat der Formel (2) mit X = Dicyclohexylmethylrest und R₃ = R₄ = Wasserstoff.

Das Äquivalentverhältnis des Präpolymers zu dem Modifizierungsmittel beträgt bevorzugt zwischen 2,0 : 1,0 und 1,0 : 2,0, insbesondere zwischen 1,1 : 1 und 1 : 1,1.

Erfindungsgemäß ist es von Vorteil, wenn das anionisch stabilisierte Polyurethanpolymer ein zahlenmittleres Molekulargewicht Mₙ von 750 bis 2.000.000, vorzugsweise 750 bis 1.000.000, besonders bevorzugt 750 bis 500.000 und insbesondere 950 bis 15.000 Dalton, eine Säurezahl von 5 bis 150, vorzugsweise 10 bis 100, besonders bevorzugt 15 bis 80 und insbesondere 20 bis 35 mg KOH/g und eine OH-Zahl von 1 bis 150, vorzugsweise 2 bis 100, besonders bevorzugt 5 bis 70 und insbesondere 10 bis 25 mg KOH/g aufweist.

Das anionisch stabilisierte Polyurethanpolymer wird mit einer Base, bevorzugt mit einer organischen Base, insbesondere mit N,N'-Dimethylethanolamin, neutralisiert, wobei die Base in einer Menge zugegeben wird, dass ein Neutralisationsgrad von 50 bis 100 %, bevorzugt von 60 bis 80% erreicht wird. Infolge der Zugabe der Base weist die Dispersion einen pH-Wert von 7,0 bis 8,0 auf.

Um die Dispergierung des teilweise neutralisierten anionisch stabilisierten Polyurethanpolymers in Wasser zu erleichtern, wird ein Alkylenglycol, bevorzugt Propylenglycol, mit einer mittleren Molmasse Mₙ von 800 bis 1.500 Da zugesetzt.

Das anionisch stabilisierte Bindemittel (a-2), insbesondere das zuvor beschriebene anionisch stabilisierte Polyurethanpolymer, ist in der wässrigen Pigmentpaste A bevorzugt in bestimmten Gesamtmengen enthalten. Vorzugsweise enthält die wässrige Pigmentpaste A das mindestens eine anionisch stabilisierte Bindemittel (a-2), vorzugsweise das zuvor beschriebene anionisch stabilisierte Polyurethanpolymer, in einer Gesamtmenge von 1 bis 25 Gew.-%, vorzugsweise von 3 bis 20 Gew.-%, insbesondere von 5 bis 17 Gew.-%, jeweils bezogen auf das Gesamtgewicht der wässrigen Pigmentpaste A. Werden verschiedene anionisch stabilisierte Bindemittel (a-2) eingesetzt, so entspricht die Summe aller anionisch stabilisierten Bindemittel (a-2) den zuvor angegebenen Gesamtmengen. Erfindungsgemäß bevorzugt enthält die wässrige Pigmentpaste A lediglich ein einziges anionisch stabilisiertes Bindemittel (a-2), es wird also keine Mischung verschiedener anionisch stabilisierter Bindemittel eingesetzt. Der Einsatz des anionisch stabilisierten Bindemittels (a-2), insbesondere der wässrigen anionisch stabilisierten Polyurethanpolymerdispersion, als alleiniges anionisch stabilisiertes Bindemittel, in wässrigen Pigmentpasten A führt zu einer hervorragenden Stabilisierung der Farbpigmente und somit zu einer hohen Lagerstabilität der Pigmentpasten.

### Nichtionisch stabilisiertes Bindemittel (a-3):

Die wässrige Pigmentpaste A kann anstelle des anionisch stabilisieren Bindemittels (a-2) auch mindestens ein nichtionisch stabilisiertes Bindemittel (a-3) enthalten. In einer bevorzugten Ausführungsform enthält die wässrige Pigmentpaste A eine Mischung aus einem anionisch stabilisierten Bindemittel (a-2), insbesondere des zuvor beschriebenen anionisch stabilisierten Polyurethanpolymers, und einem nichtionisch stabilisierten Bindemittel (a-3).

Besonders bevorzugte nichtionisch stabilisierte Bindemittel (a-3) sind ausgewählt aus in Wasser dispergierten nichtionisch stabilisierten Acrylatcopolymeren, wobei die Acrylatpolymere Monomereinheiten mit Ankergruppen zur Interaktion und stabilen Dispergierung von Farbpigmenten (a-1) sowie Monomereinheiten mit hydrophilen Abschnitten zur Stabilisierung des nichtionisch stabilisierten Acrylatcopolymers in wässriger Lösung aufweisen. Es ist daher erfindungsgemäß bevorzugt, wenn das nichtionisch stabilisierte Bindemittel (a-3) der Pigmentpaste A ein in Wasser dispergiertes nichtionisch stabilisiertes Acrylatcopolymer ist, wobei das nichtionisch stabilisierte Acrylatcopolymer erhältlich ist durch Umsetzung von
(I) mindestens einer Ankergruppen-Monomereinheit mit wenigstens einer ionisierbaren funktionellen Gruppe, einer funktionellen Gruppe mit aktivem Wasserstoff oder deren Kombination, wobei
   - die ionisierbare Funktionalität verschieden ist von einer Carbonsäuregruppe, bei welcher der Carbonyl-Kohlenstoff von dem nächstgelegenen ethylenisch nichtgesättigten Kohlenstoff um wenigstens vier Atome getrennt ist,
   - die Ankergruppen-Monomereinheiten (a) keine Polyoxyalkylengruppen aufweisen und
   - eine der Ankergruppen-Monomereinheiten copolymerisiertes 1-(2-Methacryloyloxyethyl)-2-imidazolidinon ist;
(II) 5 Gew.-% bis 45 Gew.-%, bezogen auf das Gesamtgewicht der Monomere, mindestens einer Monomereinheit, umfassend eine Polyoxyalkylengruppe, eine gamma-Hydroxycarbamatgruppe, eine beta-Hydroxycarbamatgruppe und deren Kombination; und
(III) 1 bis 50 Gewichtprozent, bezogen auf das Gesamtgewicht der Monomere, mindestens einer aromatischen Monomereinheit.

Geeignete Monomere für die Ankergruppen-Monomereinheit (I) sind ausgewählt aus der Gruppe von (Meth)acrylsäure, Ethacrylsäure, Crotonsäure, Maleinsäure und deren Monoestern, Fumarsäure und deren Monoestern, Itaconsäure und deren Monoestern, Vinylbenzoesäure, alpha-Methylvinylbenzoesäure, p-Vinylbezolsulfonsäure oder p-Vinylbenzolphosphonsäure, Mono(meth)acryloyloxyethylmaleat, -succinat oder - phthalat, aminhaltigen ethylenisch ungesättigten Monomeren, wie t-Butylaminoethyl(meth)acrylat, Dimethylaminoethyl(meth)acrylat, Dimethylaminoethyl(meth)acrylat, N,N-Dimethylaminopropyl(meth)acrylamid, N,N-Diethylamino-alpha-methylstyrol, N,N-Diethylaminostryol, Allylamin, Crotylamin, Glycidyl(meth)acrylat oder anderen Glycidylhaltigen ethylenisch ungesättigten Monomeren in denen die Glycidylgruppe vor, während oder nach der Polymerisation mit Monoaminen wie Cyclohexylamin umgesetzt wird, Aminosäuren, hydroxylfunktionellen ethylenisch ungesättigten Monomeren wie Hydroxyethyl(meth)acrylat, Hydroxypropyl(meth)acrylat und Hydroxybutyl(meth)acrylat, Estern von epsilon-Caprolacton und Hydroxyalkyl(meth)acrylaten wie das kommerziell erhältliche Monomer Tone 100M (von Dow Chemicals), Acrylamid, Methacrylamid, Carbamatalkyl(meth)acrylate, Carbamyloxyalkyl(meth)acrylaten wie 2-Carbamyloxyethylmethacrylat und 4-Carbamyloxybutylacrylat, Alkoxysilan- oder Silanol-funktionalisierten Monomeren wie Triethoxysilan, ethylenisch ungesättigten Monomeren mit Harnstoff- oder Hydrazingruppen, wie 2-(2-Oxo-1-imidazolidinyl)ethyl(meth)acrylat, sowie geeignete Mischungen. Besonders bevorzugt ist die Ankergruppen-Monomereinheit (I) ausgewählt aus Hydroxyethyl(meth)acrylat, N,N-Dimethylaminopropyl(meth)acrylamid, 2-(2-Oxo-1-imidazolidinyl)ethyl(meth)acrylat sowie Mischungen dieser Monomere.

Geeignete Beispiele für Monomereinheiten (II) sind ausgewählt aus β-Carboxyethylacrylat, Monomethyacryloyloxyethylhexahydrophthalat, Ω-Methyloxy-polyoxyethylen(meth)acrylate und S2-Methyloxypoly(oxyethylen-co-oxypropylen)(meth)acrylate mit Molekulargewichten von 1000 bis 3000 Da. Besonders bevorzugt wird als Monomereinheit (II) S2-Methyloxy-polyoxyethylen(meth)acrylat eingesetzt, wobei die Menge dieses Monomers 5 bis 50 Gew.-%, vorzugsweise 10 bis 40 Gew.-%, insbesondere 15 bis 35 Gew.-%, bezogen auf die Gesamtmenge an Monomeren, beträgt. Die zuvor angeführte Menge an Stabilisator-Monomereinheiten stellt sicher, dass das nichtionisch stabilisierte Acrylatpolymer einerseits eine ausreichende Wasserdispergierbarkeit aufweist, andererseits jedoch die Wasserbeständigkeit der wässrigen Überzugsmittel nicht negativ beeinflusst wird.

Bevorzugte aromatische Monomereinheiten (III) sind ausgewählt aus vinylaromatischen Verbindungen, wie Styrol, α-Methylstryrol, Vinyltoluol, t-Butylstryrol sowie deren Mischungen. Bevorzugt werden die aromatischen Monomereinheiten (III) in einer Gesamtmenge von 15 bis 25 Gew.-%, bezogen auf das Gesamtgewicht der Monomere, eingesetzt. Besonders bevorzugt wird Styrol in einer Gesamtmenge von 15 bis 25 Gew.-%, bezogen auf das Gesamtgewicht der Monomere, eingesetzt.

Neben den zuvor angeführten Monomeren (I) bis (III) können weitere ethylenisch ungesättigte nichtionische Monomere zur Herstellung des Arcrylatcopolymers eingesetzt werden. Derartige Monomere sind beispielsweise ausgewählt aus der Gruppe von Estern der Acrylsäure, Methacrylsäure und Crotonsäure, Mono- und Diestern von α,β-ethylenisch ungesättigen Dicarbonsäuren mit 4 bis 6 Kohlenstoffatomen, Vinylestern, Vinylethern, Vinylketonen und heterocyclischen aliphatischen Vinylverbindungen. Geeignete Ester der Acrylsäure, Methacrylsäure und Crotonsäure sind beispielsweise Methyl-, Ethyl-, Propyl-, Isopropyl-, n-Butyl-, Isobutyl-, t-Butyl-, Hexyl-, 2-Ethylhexyl-, Dodecyl-, Cyclohexyl-, Isobornyl-, Lauryl- und Stearylester von Acrylsäure, Methacrylsäure und Crotonsäure. Weitere Beispiele sind Monoester von Fumarsäure, Maleinsäure und Itaconsäure sowie deren Diester mit Alkoholen wie Methanol, Ethanol, Propanol, Isopropanol, Butanol, Isobutanol und t-Butanol. Weitere geeignete Monomere sind Vinylacetat, Vinylpropionat, Vinylether wie Vinylethylether, Vinyl- und Vinylidenhalide, Vinylethylketon sowie 2-Vinylpyrrolidon. Besonders bevorzugt werden Alkylester von Acrylsäure und Methacrylsäure, insbesondere Butylacrylat und Methylmethacrylat, als weitere Monomere eingesetzt.

Das nichtionisch stabilisierte Acrylatcopolymer kann nach bekannten Methoden, wie Bulk- oder Lösungspolymerisation hergestellt werden. Die Polymerisation kann als flüchtige radikalische Polymerisation durchgeführt. Die freien Radikale werden typischerweise durch einen Redoxinitiator oder eine organische Peroxo- oder Azoverbindung bereitgestellt. Geeignete Initiatoren sind ausgewählt aus der Gruppe von Ammoniumperoxydisulfat, Kaliumperoxydisulfat, Natriummetabisulfit, Wasserstoffperoxid, t-Butylhydroperoxid, Dilaurylperoxid, t-Butylperoxybenzoat, t-Butylper-2-ethylhexanoat, Di-tert-butylperoxid, 2,2'-Azobis(isobutyronitril), 2,2'-Azobis(isovaleronitril) sowie Redoxinitiatoren wie Ammoniumperoxydisulfat und Natriummetabisulfit mit Eisen(II)ammoniumsulfat. Weiterhin kann die Polymerisation als anionische, kationische sowie kontrollierte radikalische Polymerisation durchgeführt werden.

Das nichtionisch stabilisierte Acrylatcopolymer weist bevorzugt ein gewichtsmittleres Molekulargewicht M_{w} von 8.000 bis 70.000 Da auf, wobei das Molekulargewicht M_{w} mittels Gelpermeationschromatographie unter Verwendung von Polymethylmethacrylat als Standard bestimmt wird. Die Glasübergangstemperatur T_{g} des nichtionisch stabilisierten Acrylatcopolymers beträgt bevorzugt von -30 bis 180 °C, insbesondere von 0 bis 120 °C und kann mittels dynamischer Differenzkalorimetrie (DKK) bestimmt werden.

Besonders bevorzugt werden in Wasser dispergierte nichtionisch stabilisierte Acrylatcopolymere (a-3) eingesetzt, wobei das nichtionisch stabilisierte Acrylatcopolymer erhältlich ist durch Umsetzung von
(I) 25 bis 35 Gew.-%, bezogen auf das Gesamtgewicht der Monomere, hydroxylfunktioneller ethylenisch ungesättigter Monomere, ethylenisch ungesättigter Monomere mit Harnstoffgruppen, aminhaltiger ethylenisch ungesättigter Monomere sowie deren Mischungen, insbesondere einer Mischung aus Hydroxyethyl(meth)acrylat, N,N'-Dimethylaminopropylacrylamid und 2-(2-Oxo-1-imidazolidinyl)ethyl(meth)acrylat,
(II) 25 Gew.-% bis 35 Gew.-%, bezogen auf das Gesamtgewicht der Monomere, Ω-Methyloxy-polyoxyethylen(meth)acrylat,
(III) 15 bis 25 Gew.-%, bezogen auf das Gesamtgewicht der Monomere, vinylaromatischer Verbindungen, insbesondere Styrol, und
(IV) 15 bis 25 Gew.-%, bezogen auf das Gesamtgewicht der Monomere, C₁-C₁₀-Alkylacrylaten und C₁-C₁₀-Methacrylacrylaten, insbesondere n-Butylacrylat und Methylmethacrylat.

Das nichtionisch stabilisierte Bindemittel (a-3), insbesondere das zuvor beschriebene nichtionisch stabilisierte Acrylatcopolymer, ist in der wässrigen Pigmentpaste A bevorzugt in bestimmten Gesamtmengen enthalten. Vorzugsweise enthält die wässrige Pigmentpaste A das mindestens eine nichtionisch stabilisierte Bindemittel (a-3), insbesondere das zuvor beschriebene nichtionisch stabilisierte Acrylatcopolymer, in einer Gesamtmenge von 0,5 bis 20 Gew.-%, vorzugsweise von 1 bis 15 Gew.-%, insbesondere von 2 bis 13 Gew.-%, jeweils bezogen auf das Gesamtgewicht der wässrigen Pigmentpaste A. Werden verschiedene nichtionisch stabilisierte Bindemittel (a-3) eingesetzt, so entspricht die Summe aller nichtionisch stabilisierten Bindemittel (a-3) den zuvor angegebenen Gesamtmengen. Erfindungsgemäß bevorzugt enthält die wässrige Pigmentpaste A lediglich ein einziges nichtionisch stabilisiertes Bindemittel (a-3), es wird also keine Mischung verschiedener nichtionisch stabilisierter Bindemittel (a-3) eingesetzt. Der Einsatz des nichtionisch stabilisierten Bindemittels (a-3), insbesondere des in Wasser dispergierten nichtionisch stabilisierten Acrylatcopolymers, als alleiniges nichtionisch stabilisiertes Bindemittel (a-3), in wässrigen Pigmentpasten A führt zu einer hervorragenden Stabilisierung der Farbpigmente und somit zu einer hohen Lagerstabilität sowie Gefrier-Tau-Stabilität der Pigmentpasten.

Im Rahmen der vorliegenden Erfindung ist es vorteilhaft, wenn die wässrige Pigmentpaste A ein bestimmtes Gewichtsverhältnis von nichtionisch stabilisiertem Bindemittel (a-3) zu anionisch stabilisiertem Bindemittel (a-2) aufweist. Es ist daher erfindungsgemäß bevorzugt, wenn die mindestens eine Pigmentpaste A ein Gewichtsverhältnis der Gesamtmenge an nichtionisch stabilisiertem Bindemittel (a-3) zu der Gesamtmenge an anionisch stabilisiertem Bindemittel (a-2) von 0,1 bis 3, insbesondere von 0,25 bis 1,5, jeweils bezogen auf den Feststoffgehalt, aufweist. Als anionisch stabilisiertes Bindemittel (a-2) ist besonders bevorzugt die zuvor genannte wässrige Dispersion des anionisch stabilisierten Polyurethanpolymers, als nichtionisch stabilisiertes Bindemittel (a-3) die zuvor beschriebene wässrige Dispersion des nichtionisch stabilisierten Acrylatcopolymers enthalten. Der Einsatz der Bindemittel in den zuvor angeführten Gewichtsverhältnissen führt zu einer hohen Gefrier-Tau-Stabilität.

Die wässrige Pigmentpaste A weist einen VOC-Gehalt von weniger oder gleich 250 g/L auf. Um diesen VOC-Gehalt zu erreichen, sollte der Gehalt an organischen Lösungsmitteln in der wässrigen Pigmentpaste A möglichst gering sein. Eine besonders bevorzugte Ausführungsform des ersten Erfindungsgegenstands ist daher dadurch gekennzeichnet, dass die mindestens eine Pigmentpaste A organisches Lösungsmittel in einer Gesamtmenge von 0 bis 10 Gew.-%, vorzugsweise von 0 bis 9,8 Gew.-%, insbesondere von 0 bis 9,5 Gew.-%, jeweils bezogen auf das Gesamtgewicht der wässrigen Pigmentpaste A, enthält. Unter dem Begriff organisches Lösungsmittel werden flüchtigen Verbindungen verstanden, welche bei 20 °C einen Dampfdruck von mehr als 10 Pascal aufweisen bzw. welche einen Siedebeginn von weniger oder gleich 250 °C bei einem Standarddruck von 101,3 kPa besitzen.

### Weitere Bestandteile:

Die mindestens eine wässrige Pigmentpaste A kann zudem weitere übliche Additive, wie Vernetzungsmittel, Lackadditive, Verdickungsmittel und strahlenhärtbare Bestandteile enthalten. Geeignete weitere Bestandteile sind beispielsweise in der DE 199 21 457 A1 aufgelistet.

Die Herstellung der wässrigen Pigmentpaste A erfolgt im Allgemeinen so, dass das anionisch stabilisierte Bindemittel (a-2) vorgelegt und mit Wasser, Additiven, Pigment oder einer Paste des effekt- und ggf. farbgebenden Pigments (a-1) in Lösungsmittel vermischt wird. Anschließend wird das nichtionisch stabilisierte Bindemittel (a-3) zugegeben und erneut vermischt. Bei plättchenförmigen Effektpigmenten ist beim Vermischen darauf zu achten, dass diese nicht beschädigt werden.

Die erfindungsgemäße wässrige Pigmentpaste A weist eine hervorragende Gefrier-Tau-Stabilität auf. Hingegen weisen wässrige Pigmentpasten, welche kein anionisch und/oder nichtionisch stabilisiertes Bindemittel, insbesondere kein zuvor genanntes anionisch stabilisiertes Bindemittel (a-2) und nichtionisch stabilisiertes Bindemittel (a-3), enthalten, keine ausreichende Gefrier-Tau-Stabilität auf.

Besonders bevorzugte Ausführungsformen AF1 bis AF12 der wässrigen Pigmentpaste A sind nachfolgend wiedergegeben (alle Mengenangaben beziehen sich auf das Gesamtgewicht der wässrigen Pigmentpaste A; werden Dispersionen eingesetzt, beziehen sich alle Mengenangaben auf den Feststoffgehalt der Dispersionen am Gesamtgewicht der wässrigen Pigmentpaste A).

AF1: Wässrige Pigmentpaste A, enthaltend 2,5 bis 47 Gew.-% mindestens eines Farbpigments (a-1) sowie mindestens ein nichtionisch stabilisiertes Bindemittel (a-3).

AF2: Wässrige Pigmentpaste A, enthaltend 2,5 bis 47 Gew.-% mindestens eines Farbpigments (a-1) sowie 2 bis 13 Gew.-% mindestens eines nichtionisch stabilisierten Bindemittels (a-3).

AF3: Wässrige Pigmentpaste A, enthaltend 2,5 bis 47 Gew.-% mindestens eines Farbpigments (a-1) sowie mindestens ein anionisch stabilisiertes Bindemittel (a-2).

AF4: Wässrige Pigmentpaste A, enthaltend 2,5 bis 47 Gew.-% mindestens eines Farbpigments (a-1) sowie 5 bis 17 Gew.-% mindestens eines anionisch stabilisierten Bindemittels (a-2).

AF5: Wässrige Pigmentpaste A, enthaltend mindestens ein Farbpigment (a-1), insbesondere 2,5 bis 47 Gew.-% mindestens eines Farbpigments, sowie mindestens ein anionisch stabilisiertes Bindemittel (a-2) und mindestens ein nichtionisch stabilisiertes Bindemittel (a-3).

AF6: Wässrige Pigmentpaste A, enthaltend 2,5 bis 47 Gew.-% mindestens eines Farbpigments (a-1) sowie 2 bis 13 Gew.-% mindestens eines nichtionisch stabilisierten Bindemittels (a-3) und 5 bis 17 Gew.-% mindestens eines anionisch stabilisierten Bindemittels (a-2).

AF7: Wässrige Pigmentpaste A, enthaltend ein Gewichtsverhältnis der Gesamtmenge an nichtionisch stabilisiertem Bindemittel (a-3) zu der Gesamtmenge an anionisch stabilisiertem Bindemittel (a-3) von 0,1 bis 3, insbesondere von 0,25 bis 1,5, jeweils bezogen auf den Feststoffgehalt der Bindemittel.

AF8: Wässrige Pigmentpaste A gemäß einer der Ausführungsformen AF1 bis AF7, wobei zusätzlich mindestens ein Effektpigment enthalten ist.

AF9: Wässrige Pigmentpaste A gemäß einer der Ausführungsformen AF1, AF2, AF5 bis AF8, wobei das nichtionisch stabilisierte Bindemittel (a-3) ein in Wasser dispergiertes nichtionisch stabilisiertes Acrylatcopolymer ist und wobei das nichtionisch stabilisierte Acrylatpolymer erhältlich ist durch Umsetzung von
(I) 25 bis 35 Gew.-%, bezogen auf das Gesamtgewicht der Monomere, hydroxylfunktioneller ethylenisch ungesättigter Monomere, ethylenisch ungesättigter Monomere mit Harnstoffgruppen, aminhaltiger ethylenisch ungesättigter Monomere sowie deren Mischungen, insbesondere einer Mischung aus Hydroxyethyl(meth)acrylat, N,N'-Dimethylaminopropylacrylamid und 2-(2-Oxo-1-imidazolidinyl)ethyl(meth)acrylat,
(II) 25 Gew.-% bis 35 Gew.-%, bezogen auf das Gesamtgewicht der Monomere, Ω-Methyloxy-polyoxyethylen(meth)acrylat,
(III) 15 bis 25 Gew.-%, bezogen auf das Gesamtgewicht der Monomere, vinylaromatischen Verbindungen, insbesondere Styrol, und
(IV) 15 bis 25 Gew.-%, bezogen auf das Gesamtgewicht der Monomere, C₁-C₁₀-Alkylacrylaten und C₁-C₁₀-Methacrylacrylaten, insbesondere n-Butylacrylat und Methylmethacrylat.

AF10: Wässrige Pigmentpaste A gemäß Ausführungsform AF9, wobei das nichtionisch stabilisierte Acrylatcopolymer ein gewichtsmittleres Molekulargewicht M_{w} von 8.000 bis 70.000 Da und eine Glasübergangstemperatur T_{g} von -30 bis 180 °C, insbesondere von 0 bis 120 °C, aufweist.

AF11: Wässrige Pigmentpaste A gemäß einer der Ausführungsformen AF3 bis AF8, wobei das anionisch stabilisierte Bindemittel (a-2) ein zahlenmittleres Molekulargewicht Mₙ von 750 bis 2.000.000, vorzugsweise 750 bis 1.000.000, besonders bevorzugt 750 bis 500.000 und insbesondere 950 bis 15.000 Dalton, eine Säurezahl von 5 bis 150, vorzugsweise 10 bis 100, besonders bevorzugt 15 bis 80 und insbesondere 20 bis 35 mg KOH/g und eine OH-Zahl von 1 bis 150, vorzugsweise 2 bis 100, besonders bevorzugt 5 bis 70 und insbesondere 10 bis 25 KOH/g aufweist.

AF12: Wässrige Pigmentpaste A gemäß einer der Ausführungsformen AF3 bis AF8 sowie AF11, wobei das anionisch stabilisierte Bindemittel (a-2) eine in Wasser dispergiertes anionisch stabilisierte Polyurethanpolymer ist, wobei das anionisch stabilisierte Polyurethanpolymer erhältlich durch Umsetzung eines NCO-Präpolymers mit einem Modifizierungsmittel in Form eines Polyols, insbesondere Trimethylolpropan, im Äquivalentverhältnis NCO-Präpolymer zu Modifizierungsmittel von 1,1 : 1 bis 1 : 1,1 und wobei das NCO-Präpolymer erhältlich ist durch Umsetzung von
(i) 55 bis 70 Gew.-%, bezogen auf das Gesamtgewicht der Verbindungen (i) bis (iv), mindestens eines Polyesterpolyols mit einer OH-Zahl von 40 bis 100 mg KOH/g, bezogen auf den Feststoffgehalt, und einem zahlenmittleren Molekulargewicht Mₙ von 1000 bis 3000 Da, wobei das Polyesterpolyol keine olefinischen Doppelbindungen enthält,
(ii) 3 bis 7 Gew.-%, bezogen auf das Gesamtgewicht der Verbindungen (i) bis (iv), mindestens einer Alkansäure mit 3 bis 8 Kohlenstoffatomen sowie zwei Hydroxylgruppen am alpha-ständigen Kohlenstoffatom, insbesondere Dimethylolpropionsäure,
(iii) 0,5 bis 3 Gew.-%, bezogen auf das Gesamtgewicht der Verbindungen (i) bis (iv), mindestens einem Polyol der Formel (1) 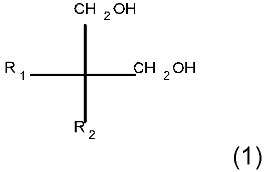 mit R₁ = R₂ = Methyl und
(iv) 25 bis 30 Gew.-%, bezogen auf das Gesamtgewicht der Verbindungen (i) bis (iv), mindestens einem Diisocyanat der Formel (2) 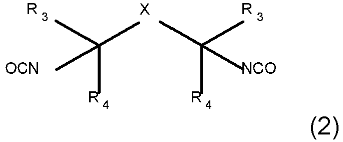 mit X = Dicyclohexylmethylrest und R₃ = R₄ = Wasserstoff.

Die zuvor angeführten Ausführungsformen AF1 bis AF12 der wässrigen Pigmentpaste A weisen eine stabile Dispergierung der enthaltenen Pigmente auf und besitzen daher eine hohe Lagerstabilität. Zudem wird durch die stabile Dispergierung eine hohe Farbtongenauigkeit sowie eine gute Abdeckung erreicht. Darüber hinaus führt der Einsatz von nichtionisch und/oder anionisch stabilisierten Bindemitteln, insbesondere den zuvor angeführten speziellen Bindemittel, zu guten mechanischen Eigenschaften, insbesondere einer guten Haftung auf der Originallackierung, einer hohen Schwitzwasserbeständigkeit sowie einer guten Steinschlaghaftung, der wässrigen Überzugsmittel. Darüber hinaus wird eine hervorragende Gefrier-Tau-Stabilität erreicht.

### Komponente (b)

Bei der Komponente (b) handelt es sich um eine pigmentfreie Komponente B, welche mindestens eine acrylatbasierte Mikrogel-Dispersion (b-1) umfasst, wobei das Mikrogel eine Glasübergangstemperatur T_{g} von 50 bis 60°C aufweist. Auch die Komponente B weist einen VOC-Gehalt von kleiner oder gleich 250 g/L auf.

Unter pigmentfrei wird im Rahmen der vorliegenden Erfindung verstanden, dass die Komponente B keine Effektpigmente, Farbpigmente und Füllstoffe enthält. Bevorzugt sind daher in der Komponente B 0 Gew.-%, bezogen auf das Gesamtgewicht der Komponente B, an Effektpigmenten, Farbpigmenten und Füllstoffen enthalten.

### Wässrige acrylatbasierte Mikrogel-Dispersion (b-1):

Mikrogel-Dispersionen, im Stand der Technik auch Latex genannt, sind grundsätzlich bekannt. Es handelt sich um Polymer-Dispersion, in welcher zum einen das Polymer in Form von vergleichsweise kleinen Partikeln mit Teilchengrößen von beispielsweise 0,02 bis 10 Mikrometern vorliegt ("Mikro"-gel). Zum anderen aber sind die PolymerPartikel zumindest teilweise intramolekular vernetzt, die innere Struktur gleicht also einem typischen polymeren dreidimensionalen Netzwerk. Makroskopisch betrachtet handelt es sich bei einer solchen Mikrogel-Dispersion nach wie vor um eine Dispersion von Polymerpartikeln in einem Dispersionsmedium, insbesondere Wasser.

Der Anteil der vernetzten Polymeren kann nach Entfernung von Wasser und gegebenenfalls organischen Lösungsmitteln und nachfolgender Extraktion des festen Polymeren ermittelt werden. Die Vernetzung kann über den experimentell zugänglichen Gelanteil überprüft werden. Dabei muss ausgeschlossen werden, dass bei der Isolierung des polymeren Feststoffs nachgeschaltete Vernetzungsreaktionen den Gelanteil weiter erhöhen. Letztlich handelt es sich bei dem Gelanteil um den Anteil des Polymers in der Dispersion, der sich als isolierter Feststoff nicht molekular dispers in einem Lösemittel lösen lässt. Dieser unlösliche Anteil entspricht wiederum dem Anteil des in der Dispersion in Form von intramolekular vernetzen Partikeln beziehungsweise Partikelanteilen vorliegenden Polymers.

Die im Rahmen der vorliegenden Erfindung einzusetzenden Mikrogele sind acrylatbasiert. Sie umfassen beziehungsweise bestehen aus entsprechenden copolymerisierten Acrylatmonomeren. Natürlich können solche Mikrogele neben den wesenskennzeichnenden Acrylatmonomeren auch weitere Monomere enthalten, welche ebenfalls durch radikalische Copolymerisation in das Polymer eingebunden werden können. Besonders bevorzugt werden im Rahmen der vorliegenden Erfindung jedoch acrylatbasierte Mikrogele eingesetzt, welche unter ausschließlicher Verwendung von Acrylatmonomeren, insbesondere (Meth)acrylsäure und (Meth)acrylaten, hergestellt wurden.

Grundsätzliche Herstellverfahren solcher Mikrogele sind bekannt und werden im Stand der Technik beschrieben. Bevorzugt erfolgt die Herstellung der Mikrogel-Dispersionen (b-1) über eine radikalische Emulsionspolymerisation, insbesondere eine einstufige radikalische Emulsionspolymerisation, wie im Zusammenhang mit dem anionisch stabilisierten Bindemittel (b-2b) beschrieben.

Das acrylatbasierte Mikrogel weist eine Glasübergangstemperatur T_{g} von 50 bis 60°C auf. Die Glasübergangstemperatur wird hierbei mittels DIN 53765 "Thermische Analyse - Dynamische Differenzkalorimetrie (DDK)" bestimmt, wie unter Punkt 2 der Methodenbeschreibung beschrieben.

Wie zuvor ausgeführt, handelt es sich bei dem acrylatbasierten Mikrogel um vernetzte Polymerpartikel. Derartige Polymerpartikel weisen aufgrund ihrer Vernetzung einen Gelanteil auf. Bevorzugt eingesetzte Mikrogele sind hochvernetzt und weisen daher einen hohen Gelanteil auf. Eine besonders bevorzugte Ausführungsform ist daher dadurch gekennzeichnet, dass die acrylatbasierte Mikrogel-Dispersion einen Gelanteil von 80 bis 100 %, vorzugsweise von 85 bis 100 %, bevorzugt von 88 bis 98 %, insbesondere von 90 bis 98 %, jeweils bezogen auf den Festkörper der Dispersion, aufweist. Der Gelanteil kann dabei gravimetrisch (siehe Punkt 14. der Methodenbeschreibung) bestimmt werden. Der Einsatz von acrylatbasierten Mikrogel-Dispersionen mit den zuvor angeführten Gelanteilen führt zu einer verbesserten Oberflächenhärte der wässrigen Überzugsmittel und daraus hergestellter Mehrschichtlackierungen.

Die acrylatbasierte Mikrogel-Dispersion weist bevorzugt eine zahlenmittlere Teilchengröße von 100 bis 250 nm, insbesondere von 120 bis 250 nm, auf. Die zahlenmittlere Teilchengröße kann beispielsweise mittels Photonenkorrelationsspektroskopie (siehe Punkt 3 der Methodenbeschreibung) bestimmt werden.

Eine im Rahmen der vorliegenden Erfindung bevorzugt eingesetzte acrylatbasierte Mikrogel-Dispersion ist erhältlich durch radikalische Emulsionspolymerisation, insbesondere einstufige radikalische Emulsionspolymerisation, von
- mindestens einem ersten Monomer (i), welches mindestens zwei Alkenylgruppen aufweist und
- mindestens einem weiteren einfach olefinisch ungesättigten Monomer (ii).

Das Monomer (i) ist bevorzugt ausgewählt aus der Gruppe von Ethylenglycoldimethacrylat, Tetraethylenglycoldimethacrylat, Methylenbisacrylamid, Methylbismethacrylamid, Divinylbenzol, Vinylmethacrylat, Vinylcrotonat, Divinylacetylen, Trivinylbenzol, Glycerintrimethacrylat, Pentaerythritoltetramethacrylat, Triallylcyanurat, Divinylethan, Divinylsulfid, Divinylsulfon, Hexatrien, Triethylenglycoldimethacrylat, Diallylcyanamid, Glycoldiacrylat, Ethylenglycoldivinylether, Diallylphthalat, Trimethylolpropandiallylether, Divinyldimethylsilan, Glyceroltrivinylether, Trimethylolpropantriacrylat, Trimethylolethantriacrylat, Trimethylolpropantrimethacrylat, Trimethylolethantrimethacrylat, Tetramethylenglycoldimethacrylat, Triethylenglycoldimethacrylat, Tetraethylenglycoldiacrylat, Tetraethylenglycoldimethacrylat, Pentaerythritoldiacrylat, Pentaerythritoltriacrylat, Pentraerythritoltetraacrylat, Dipentaerythritoldiacrylat, Dipentaerythritoltriacrylat, Dipentaerythritoltetraacrylat, Dipentaerythritolpentaacrylat, Dipentaerythritolhexacrylat, Tripentaerythritoloctoacrylat, Pentaerythritoldimethacrylat, Pentaerythritoltrimethacrylat, Dipentaerythrtioldimethacrylat, Dipentaerythritoltetramethacrylat, Tripentaerythritoloctamethacrylat, Pentaerythritoldiitaconat, Dipentaerythritoltrisitaconat, Dipentaerythritolpentaitaconat, Dipentaerythritolhexaitaconat, 1,3-Butandioldiarylat, 1,3-Butandioldimethacrylat, 1,4-Butandioldiitaconat, Sorbitoltriacrylat, Sorbitoltetracrylat, Sorbitoltetramethacrylat, Sorbitolpentaacrylat, Sorbitolhexacrylat, modifiziertem 1,4-Butylendiacrylat, 1,6-Hexandioldiacrylat, modifiziertem Trimethylolpropantriacrylat, modifiziertem Pentaerythritoltriacrylat, methyliertem Epoxyharz sowie deren Mischungen. Besonders bevorzugt wird 1,6-Hexandioldiacrylat als Monomer (i) eingesetzt. Der Einsatz der Monomere (i) führt zu einer Vernetzung der entstehenden Polymere. Derartige Polymere weisen daher einen Mikrogelanteil auf, wobei der Mikrogelanteil abhängig von der Menge des eingesetzten Vernetzungsmittels bzw. Monomers (i) ist. Bevorzugt beträgt die Menge des Monomers (i) 50 bis 80 Gew.-%, insbesondere 60 bis 70 Gew.-%, bezogen auf das Gesamtgewicht der Monomere (i) und (ii).

Das Monomer (ii) ist einfach olefinisch ungesättigt und weist daher lediglich eine Alkenylgruppe auf. Bevorzugt wird eine Mischung von zwei verschiedenen Monomeren (ii) eingesetzt, wobei ein Monomer eine Hydroxy-, Carboxylamid- oder Epoxygruppe aufweist und das andere Monomer ein C₁-C₄-Alkylester der (Meth)acrylsäure oder ein vinylaromatisches Monomer ist. Monomere, welche Hydroxy-, Carboxylamid- oder Epoxygruppen aufweisen sind beispielsweise ausgewählt aus der Gruppe von (Meth)acrylsäure, Hydroxyethyl(meth)acrylat sowie Hydroxypropyl(meth)acrylat. C₁-C₄-Alkylester der (Meth)acrylsäure sind insbesondere Methyl-, Ethyl-, Propyl- oder Butyl(meth)acrylat. Geeignete vinylaromatische Verbindungen sind Styrol oder alpha-Methylstyrol. Besonders bevorzugt wird als Monomer (ii) eine Mischung aus 10 bis 90 Gew.-% Hydroxypropyl(meth)acrylat und 10 bis 90 Gew.-% Methyl(meth)acrylat eingesetzt, wobei sich die Gewichtsangabe auf das Gesamtgewicht der Monomere (i) und (ii) beziehen.

Die vorzugsweise einstufige Emulsionspolymerisation wird in Wasser unter Verwendung von dem Fachmann bekannten Emulgatoren und Initiatoren durchgeführt. Geeignete Emulgatoren und Initiatoren sind beispielsweise in der Offenlegungsschrift US 4 598 111 A beschrieben.

Besonders bevorzugt ist die acrylatbasierte Mikrogel-Dispersion (b-1) erhältlich durch insbesondere einstufige radikalische Emulsionspolymerisation von - bezogen auf das Gesamtgewicht der Monomere (i) und (ii) -
(i) 60 bis 70 Gew.-% eines ersten Monomers, welches mindestens zwei Alkenylgruppen aufweist, insbesondere 1,6-Hexandioldiacrylat, und
(ii)einer Mischung aus 10 bis 90 Gew.-% C₁-C₁₀-Hydroxyalkyl(meth)acrylat, insbesondere Hydroxypropylmethacrylat, und 10 bis 90 Gew.-% C₁-C₁₀-Alkyl(meth)acrylat, insbesondere Methylmethacrylat.

Die pigmentfreie Komponente B enthält die acrylatbasierte Mikrogel-Dispersion (b-1), bevorzugt in einer bestimmten Gesamtmenge. Vorzugsweise enthält die pigmentfreie Komponente B die acrylatbasierte Mikrogel-Dispersion (b-1) in einer Gesamtmenge von 1 bis 15 Gew.-%, vorzugsweise von 5 bis 12 Gew.-%, insbesondere von 6 bis 9 Gew.-%, jeweils bezogen auf das Gesamtgewicht der pigmentfreien Komponente B. Der Einsatz der acrylatbasierten Mikrogel-Dispersion (b-1) in den zuvor angeführten Gesamtmengen führt zu guten mechanischen Eigenschaften. Insbesondere die Oberflächenhärte des wässrigen Überzugsmittels können bei Einsatz der acrylatbasierten Mikrogel-Dispersion (b-1) gesteigert werden.

Gemäß einer besonders bevorzugten Ausführungsform der vorliegenden Erfindung enthält die pigmentfreie Komponente B neben der zuvor beschriebenen wässrigen acrylatbasierten Mikrogel-Dispersion weiterhin mindestens ein anionisch stabilisiertes Bindemittel (b-2).

### Anionisch stabilisiertes Bindemittel (b-2):

Geeignete anionisch stabilisierte Bindemittel (b-2) sind ausgewählt aus der Gruppe von anionisch stabilisierten Polyurethanen, anionisch stabilisierten (Meth)acrylaten, anionisch stabilisierten Polyurethan-Poly(meth)acrylat-Hybridpolymeren sowie deren Mischungen.

Um den zuvor beschriebenen geringen VOC-Gehalt der pigmentfreien Komponente B zu erreichen werden besonders bevorzugt anionisch stabilisierte Bindemittel (b-2) in Form von wässrigen Dispersionen anionisch stabilisierter Polymere eingesetzt. Besonders bevorzugt wird in der Komponente B das gleiche anionisch stabilisierte Bindemittel eingesetzt wie in der wässrigen Pigmentpaste A, also die zuvor beschriebene wässrige anionisch stabilisierte Polyurethanpolymerdispersion. Darüber hinaus ist es erfindungsgemäß bevorzugt, wenn die Komponente B ein weiteres anionisch stabilisiertes Bindemittel, insbesondere eine wässrige anionisch stabilisierte Arcylatpolymer-Dispersion, enthält. In einer besonders bevorzugten Ausführungsform enthält die pigmentfreie Komponente B als anionisch stabilisierte Bindemittel (b-2) daher eine Mischung des zuvor im Zusammenhang mit der Pigmentpaste A beschriebenen in Wasser dispergierten anionisch stabilisierten Polyurethanpolymers (b-2a), des nachfolgend beschriebenen in Wasser dispergierten anionisch stabilisierten Acrylatpolymers (b-2b) sowie des nachfolgend beschriebenen in Wasser dispergierten anionisch stabilisierten Polyurethan-Poly(meth)acrylat-Hybridpolymers (b-2c).

Es ist daher erfindungsgemäß besonders vorteilhaft, wenn die pigmentfreie Komponente B als anionisch stabilisiertes Bindemittel (b-2b) mindestens ein in Wasser dispergiertes anionisch stabilisiertes Polymerisat mit einer Teilchengröße von 100 bis 500 nm enthält, wobei die Herstellung des Polymerisats die aufeinanderfolgende radikalische Emulsionspolymerisation von drei Mischungen (A), (B) und (C) von olefinisch ungesättigten Monomeren umfasst, wobei
- die Mischung (A) mindestens 50 Gew.-% von vinylaromatischen Monomeren enthält und ein Polymer, welches aus der Mischung (A) hergestellt wird, eine Glasübergangstemperatur von 10 bis 65°C besitzt,
- die Mischung (B) mindestens ein mehrfach ungesättigtes Monomer enthält und ein Polymer, welches aus der Mischung (B) hergestellt wird, eine Glasübergangstemperatur von -35 bis 15°C besitzt, und
- die Mischung (C) mindestens ein anionisches Monomer enthält und ein Polymer, welches aus der Mischung (C) hergestellt wird, eine Glasübergangstemperatur von -50 bis 15°C besitzt,
und wobei
i. zunächst die Mischung (A) polymerisiert wird,
ii. dann die Mischung (B) in Gegenwart des unter i. hergestellten Polymerisats polymerisiert wird, und
iii. danach die Mischung (C) in Gegenwart des unter ii. hergestellten Polymerisats polymerisiert wird.

Bevorzugt enthält die Dispersion genau ein zuvor beschriebenes Polymerisat (b-2b). Die Herstellung des Polymerisats umfasst die aufeinanderfolgende radikalische Emulsionspolymerisation von drei Mischungen (A), (B) und (C) von olefinisch ungesättigten Monomeren. Die Stufen können, zeitlich betrachtet, direkt hintereinander stattfinden. Möglich ist es genauso, dass nach Abschluss einer Stufe die entsprechende Reaktionslösung für eine gewisse Zeitspanne gelagert und/oder in ein anderes Reaktionsgefäß überführt wird und erst dann die nächste Stufe stattfindet. Bevorzugt umfasst die Herstellung des speziellen mehrstufigen Polymerisats neben der Polymerisation der Monomerenmischungen (A), (B) und (C) keine weiteren Polymerisationsschritte.

Bei der radikalischen Emulsionspolymerisation werden olefinisch ungesättigte Monomere in wässrigem Medium unter Einsatz von mindestens einem wasserlöslichen Initiator und in Anwesenheit mindestens eines Emulgators polymerisiert. Entsprechende wasserlösliche Initiatoren sind bekannt. Bevorzugt wird der mindestens eine wasserlösliche Initiator ausgewählt aus der Gruppe bestehend aus Kalium-, Natrium- oder Ammoniumperoxodisulfat, Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid, 2,2'-Azo- bis-(4-cyanopentansäure) sowie Mischungen der vorgenannten Initiatoren, beispielsweise Wasserstoffperoxid und Natriumpersulfat. Weitere geeignete Initiatoren und Übergangsmetallkatalysatoren sind beispielsweise in der Offenlegungsschrift WO 2017/088988 A1 offenbart. Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der in der jeweiligen Polymerisationsstufe eingesetzten Monomere, eingesetzt.

Eine Emulsionspolymerisation verläuft in einem Reaktionsmedium, das Wasser als kontinuierliches Medium und den mindestens einen Emulgator in Form von Micellen enthält. Die Polymerisation wird durch Zerfall des wasserlöslichen Initiators im Wasser gestartet. Die wachsende Polymerkette lagert sich in die Emulgator-Micellen ein und die weitere Polymerisation findet dann in den Micellen statt. Der mindestens eine Emulgator wird bevorzugt in einer Menge von 0,1-10 Gew.-%, besonders bevorzugt 0,1-5 Gew.-%, ganz besonders bevorzugt 0,1-3 Gew.-%, jeweils bezogen auf das Gesamtgewicht der in der jeweiligen Polymerisationsstufe eingesetzten Monomere, eingesetzt. Auch Emulgatoren sind grundsätzlich bekannt. Es können nichtionische oder ionische Emulgatoren, auch zwitterionische, gegebenenfalls auch Mischungen der vorgenannten Emulgatoren, verwendet werden, wie beispielsweise in der Offenlegungsschrift WO 2017/088988 A1 beschrieben.

Die Emulsionspolymerisationen werden zweckmäßigerweise bei einer Temperatur von 0 bis 160°C, vorzugsweise von 15 bis 95°C, nochmals bevorzugt 60 bis 95°C durchgeführt. Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich. Insbesondere wenn Polymerisationstemperaturen angewendet werden, welche oberhalb des bei Normaldruck bestehenden Siedepunktes von Wasser, der eingesetzten Monomere und/oder der organischen Lösemittel liegen, werden in der Regel höhere Drücke gewählt.

Die einzelnen Polymerisationsstufen bei der Herstellung des speziellen Polymerisats können beispielsweise als so genannte "verhungernde Polymerisationen" (auch als "starve feed", "starve fed" oder "starved feed"-Polymerisationen bekannt) durchgeführt werden. Als verhungernde Polymerisation im Sinne der vorliegenden Erfindung wird eine Emulsionspolymerisation angesehen, bei welcher der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird.

Die Konzentration der Monomere in der Reaktionslösung kann dabei beispielsweise gaschromatographisch bestimmt werden, wie in der Offenlegungsschrift WO 2017/088988 A1 beschrieben. Der Anteil der freien Monomere kann durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Momomermischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Momomermischung C weiterwachsen zu lassen (daher nachstehend auch Schale genannt), sodass schließlich ein Polymerisat umfassend Partikel enthaltend Saat, Kern und Schale resultiert. Selbstverständlich kann auch die Stufe i. unter verhungernden Bedingungen durchgeführt werden.

Bei den Mischungen (A), (B) und (C) handelt es sich um Mischungen von olefinisch ungesättigten Monomeren, wobei die Mischungen (A), (B) und (C) unterschiedlich voneinander sind. Sie enthalten also jeweils unterschiedliche Monomere und/oder unterschiedliche Anteile mindestens eines bestimmten Monomers.

Die Mischung (A) enthält mindestens 50 Gew.-%, bevorzugt mindestens 55 Gew.-%, von vinylaromatischen Verbindungen. Ein entsprechendes bevorzugtes Monomer ist Styrol. Neben den vinylaromatischen Verbindungen enthält die Mischung (A) keine Monomere mit funktionellen Gruppen enthaltend Heteroatome. Besonders bevorzugt enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymer eine Glasübergangstemperatur von 10 bis 65°C, bevorzugt von 30 bis 50°C besitzt. Für eine zielführende Abschätzung der bei der Messung zu erwartenden Glasübergangstemperatur kann die bekannte Fox-Gleichung herangezogen werden. Da die Fox-Gleichung eine gute Näherung darstellt, die auf den Glasübergangstemperaturen der Homopolymere und deren Gewichtsteilen ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

Das in Stufe i. durch die Emulsionspolymerisation der Monomerenmischung (A) hergestellte Polymerisat besitzt bevorzugt eine Teilchengröße von 20 bis 125 nm (bezüglich der Messung der Teilchengröße siehe Punkt 3 der Methodenbeschreibung).

Die Mischung (B) enthält mindestens ein mehrfach olefinisch ungesättigtes Monomer, bevorzugt mindestens ein zweifach olefinisch ungesättigtes Monomer. Ein entsprechendes bevorzugtes Monomer ist 1,6-Hexandioldiacrylat. Bevorzugt enthält auch die Monomerenmischung (B) keine Monomere mit funktionellen Gruppen enthaltend Heteroatome. Besonders bevorzugt enthält die Monomermischung (B) neben mindestens einem mehrfach olefinisch ungesättigten Monomer jedenfalls noch folgende Monomere. Zum einen mindestens einen einfach ungesättigten Ester der (Meth)acrylsäure mit einem Alkylrest und zum anderen mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Die in der Mischung (B) enthaltenen Monomere werden so ausgewählt, dass ein daraus hergestelltes Polymer eine Glasübergangstemperatur von -35 bis 15°C, bevorzugt von -25 bis +7°C besitzt.

Das Polymerisat, welches nach der Stufe ii. erhalten wird, besitzt bevorzugt eine Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat. Demzufolge enthält die Mischung (C) bevorzugt mindestens eine alpha-beta ungesättigte Carbonsäure, insbesondere bevorzugt (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat. Bei allen vorstehend genannten Säurezahlen und OH-Zahlen handelt es sich um auf Basis der insgesamt eingesetzten Monomerenmischungen berechnete Werte.

Besonders bevorzugt enthält die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Besonders bevorzugt enthält weder die Monomerenmischung (A) noch die Monomerenmischungen (B) oder (C) ein Polyurethanpolymer, welches mindestens eine polymerisierbare Doppelbindung aufweist.

Das Polymerisat besitzt nach seiner Herstellung eine Teilchengröße von 100 bis 500 nm, bevorzugt 125 bis 400 nm, ganz besonders bevorzugt von 130 bis 300 nm sowie eine Glasübergangstemperatur T_{g} von -20 bis -5°C.

Bevorzugt werden die Anteile der Monomerenmischungen wie folgt aufeinander abgestimmt. Der Anteil der Mischung (A) beträgt von 0,1 bis 10 Gew.-%, der Anteil der Mischung (B) von 60 bis 80 Gew.-% und der Anteil der Mischung (C) von 10 bis 30 Gew.-%, jeweils bezogen auf die Summe der Einzelmengen der Mischungen (A), (B) und (C).

Die wässrige Dispersion besitzt bevorzugt einen pH-Wert von 5,0 bis 9,0, nochmals bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des Polymerisats gezielt eingestellt werden. Bevorzugt werden die beschriebenen Stufen i. bis iii. ohne Zusatz von zur Einstellung des pH-Werts bekannten Säuren oder Basen durchgeführt und der pH-Wert erst nach der Herstellung des Polymerisats durch Zugabe von organischen, stickstoffhaltigen Basen, Natriumhydrogencarbonat, Boraten und auch Mischungen der vorgenannten Substanzen.

Der Festkörper der wässrigen Dispersion beträgt bevorzugt von 15 bis 40 % nochmals bevorzugt 20 bis 30 %.

Die wässrige Dispersion enthält bevorzugt einen Anteil von 55 bis 75 Gew.-%, insbesondere bevorzugt 60 bis 70 Gew.-%, jeweils bezogen auf das Gesamtgewicht der Dispersion, Wasser.

Ein im Rahmen der vorliegenden Erfindung besonders bevorzugt eingesetztes anionisch stabilisiertes Polymerisat (b-2b) ist herstellbar durch Umsetzung
- einer Mischung (A) von 50 bis 85 Gew.-% eines vinylaromatischen Monomeren und 15 bis 50 Gew.-% eines einfach ungesättigten Esters der (Meth)acrylsäure mit einem Alkylrest,
- einer Mischung (B) von 1 bis 4 Gew.-% eines mehrfach olefinisch ungesättigten Monomers, 60 bis 80 Gew.-% eines einfach ungesättigten Esters der (Meth)acrylsäure mit einem Alkylrest 16 bis 39 Gew.-% eines vinylaromatischen Monomeren, und
- einer Mischung (C) von 8 bis 15 Gew.-% einer alpha-beta ungesättigten Carbonsäure, 10 bis 20 Gew.-% eines einfach ungesättigten Esters der (Meth)acrylsäure mit einem mit einer Hydroxylgruppe substituierten Alkylrest und 65 bis 82 Gew.-% einfach ungesättigter Ester der (Meth)acrylsäure mit einem Alkylrest,
wobei
i. zunächst die Mischung (A) polymerisiert wird,
ii. dann die Mischung (B) in Gegenwart des unter i. hergestellten Polymerisats polymerisiert wird, und
iii. danach die Mischung (C) in Gegenwart des unter ii. hergestellten Polymerisats polymerisiert wird.

Die vorstehenden Angaben Gew.-% beziehen sich jeweils auf das Gesamtgewicht der Mischung (A) bzw. (B) bzw. (C).

Das anionisch stabilisierte Bindemittel ist bevorzugt eine wässrige Dispersion eines anionisch stabilisierten Polyurethan-Poly(meth)acrylat-Hybridpolymers (b-2c), wobei das Hybridpolymer erhältlich ist durch radikalische Umsetzung
(i) eines nichtionischen Polyurethanpolymers mit einem zahlenmittleren Molekulargewicht von 1000 bis 30.000 Da, insbesondere 1500 bis 20.000 Da, und im statischen Mittel pro Molekül 0,05 bis 1,1, insbesondere 0,2 bis 0,9, polymerisierbare Doppelbindungen mit
(ii) mindestens einem ethylenisch ungesättigten Monomeren mit mindestens einer Carbonsäuregruppe

in Gegenwart mindestens eines wasserunlöslichen Initiators,
wobei das Gewichtsverhältnis zwischen nichtionischem Polyurethanpolymer und dem mindestens einen ethylenisch ungesättigten Monomeren von 1 : 10 bis 10 : 1 beträgt.

Die nichtionische Polyurethanpolymer ist bevorzugt erhältlich durch Umsetzung von
(a) einem Polyesterpolyol mit einem zahlenmittleren Molekulargewicht von 400 bis 5000 Da,
(b) mindestens einem Polyisocyanat gegebenenfalls zusammen mit mindestens einem Monoisocyanat,
(c) mindestens einer Verbindung, welche neben einer einfach olefinisch ungesättigten Gruppe mindestens noch eine gegenüber NCO-Gruppen reaktive Gruppe enthält und
(d) mindestens einer Hydroxyl- und/oder Aminogruppen enthaltenden organischen Verbindung mit einem Molekulargewicht von 60 bis 399 Da.

Das nichtionische Polyurethanpolymer wird bevorzugt derart hergestellt, dass zunächst aus (a) bis (d) ein NCO-Präpolymer hergestellt wird, welches dann in äquimolaren Mengen, bezogen auf die NCO-Gruppen, erneut mit der Komponente (d) umgesetzt wird. Die Umsetzung der Komponenten (a) bis (d) kann auch in Gegenwart von Katalysatoren, wie z. B. Dibutylzinndilaurat, Dibutylzinnmaleat und tertiären Aminen durchgeführt werden.

Die einzusetzenden Mengen an (a) bis (d) ergeben sich aus dem anzustrebenden zahlenmittleren Molekulargewicht Mₙ. Bei den olefinisch ungesättigten Gruppen handelt es sich bevorzugt um Acrylat-, Methacrylat oder Allylethergruppen, insbesondere um Allylethergruppen.

Geeignete Polyesterdiole (a) sowie Polyisocyanate (b) sind die im Zusammenhang mit dem anionisch stabilisiertem Polyurethanpolymer (a-2) beschrieben Verbindungen.

Besonders bevorzugt werden Verbindungen (c) eingesetzt, welche neben einer einfach olefinisch ungesättigten Gruppe, insbesondere Allylethergruppe, noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH-Gruppen bevorzugt sind. Beispielsweise können 2,3-Dihydroxypropylmonoallylether, 2,3-Dihydroxypropansäureallylester, Glycerinmonoallylether, Pentaerythritmonoallylether, Pentaeythritdiallylether, Trimethylolpropanmonoallylether, Trimethylolpropandiallylether eingesetzt werden.

Besonders bevorzugt wird Trimethylolpropanmonoallylether eingesetzt. Es ist bevorzugt die Verbindung (c) kettenständig (nicht endständig) in das nichtionische Polyurethanpolymer einzubauen.

Als Komponente (d) werden bevorzugt Di- und/oder Polyamine mit primären und/oder sekundären Aminogruppen sowie Diole der obigen Formel (1) eingesetzt. Bevorzugt werden Diamine sowie Diole der obigen Formel (1) eingesetzt. Als Diamine sind zu nennen Hydrazin, Ethylendiamin, Propylendiamin, 1,4- Butylendiamin, Piperazin, 1,4-Cyclohexyldimethylamin, Hexamethylendiamin-1,6, Trimethylhexamethylendiamin, Menthandiamin, Isophorondiamin, Diethanolamin und Aminoethylethanolamin. Besonders bevorzugt wird Diethanolamin eingesetzt.

Das Hybridpolymer ist erhältlich, indem in Gegenwart des nichtionischen Polyurethans ein ethylenisch ungesättigtes Monomer oder ein Gemisch aus ethylenisch ungesättigten Monomeren unter Verwendung eines wasserunlöslichen Initiators oder einer Mischung aus wasserunlöslichen Initiatoren radikalisch polymerisiert wird, wobei das Gewichtsverhältnis zwischen dem nichtionischen Polyurethanpolymer und dem ethylenisch ungesättigten Monomer bzw. dem Gemisch aus ethylenisch ungesättigten Monomeren zwischen 1 : 10 und 10 : 1, vorzugsweise zwischen 1 : 2 und 2 : 1 liegt.

Als ethylenisch ungesättigte Monomeren werden bevorzugt eingesetzt:
(i) aliphatische Ester der (Meth)acrylsäure, welche weder Hydroxyl- noch Carboxylgruppen enthalten, insbesondere Methyl-, Ethyl-, Propyl-, Butyl-, Hexyl-, Ethylhexyl-, Stearyl- und Laurylacrylat und -methacrylat oder Gemische aus diesen Monomeren,
(ii) mindestens eine Carboxylgruppe im Molekül tragende ethylenisch ungesättigte Monomere, insbesondere Acrylsäure, Methacrylsäure, Ethacrylsäure, Crotonsäure, Maleinsäure, Fumarsäure und Itaconsäure
(iii) sowie Mischungen aus den Komponenten (i) und (ii).

Als ethylenisch ungesättigte Monomere werden vorzugsweise Mischungen eingesetzt, die aus 40 bis 95, vorzugsweise 85 bis 95 Gew.-% der Komponente (i) und 5 bis 60 Gew.-%, vorzugsweise 5 bis 15 Gew.-%, der Komponente (ii) bestehen, wobei die Summe der Gewichtsanteile von (i) und (ii) stets 100 Gew.-% ergibt.

Als wasserunlösliche Initiatoren können beispielsweise wasserunlösliche Azoverbindungen und wasserunlösliche Peroxyverbindungen eingesetzt werden. Beispiele für wasserunlösliche Peroxyverbindungen sind t-Amyl-peroxy-2-ethylhexanoat, t-Butyl-peroxy-2-ethylhexanoat, Di-tert-butylperoxid, Dilaurylperoxid, Dibenzoylperoxid und 1,1-Dimethyl-3-hydroxybutyl-(1)-peroxyethylhexanoat.

Bevorzugte Ausführungsformen der pigmentfreien Komponente B sind dadurch gekennzeichnet, dass anionisch stabilisierte Polyurethanpolymer (b-2a), das anionisch stabilisierten Polymerisat (b-2b) sowie das anionisch stabilisierte Polyurethan-Poly(meth)acrylat-Hybridpolymer (b-2c) in bestimmten Mengenbereichen enthalten sind. Es ist daher erfindungsgemäß vorteilhaft, wenn die pigmentfreie Komponente B das in Wasser dispergierte anionisch stabilisierte Polyurethanpolymer (b-2a) in einer Gesamtmenge von 1 bis 15 Gew.-%, insbesondere von 6 bis 10 Gew.-%, jeweils bezogen auf das Gesamtgewicht der pigmentfreien Komponente B, enthält. Weiterhin ist es erfindungsgemäß vorteilhaft, wenn die pigmentfreie Komponente B das in Wasser dispergierte anionisch stabilisierte Polymerisat (b-2b) in einer Gesamtmenge von 1 bis 10 Gew.-%, insbesondere von 3 bis 6 Gew.-%, jeweils bezogen auf das Gesamtgewicht der pigmentfreien Komponente B, enthält. Darüber hinaus ist es erfindungsgemäß vorteilhaft, wenn die pigmentfreie Komponente B das in Wasser dispergierte anionisch stabilisierte Polyurethan-Poly(meth)acrylat-Hybridpolymer (b-2c) in einer Gesamtmenge von 1 bis 15 Gew.-%, insbesondere von 6 bis 10 Gew.-%, jeweils bezogen auf das Gesamtgewicht der pigmentfreien Komponente B, enthält.

Im Rahmen der vorliegenden Erfindung ist es vorteilhaft, wenn die pigmentfreie Komponente B ein bestimmtes Gewichtsverhältnis der drei anionisch stabilisierten Bindemittel (b-2) aufweist. Es ist daher erfindungsgemäß bevorzugt, wenn die mindestens eine Komponente B ein Gewichtsverhältnis der Gesamtmenge an anionisch stabilisiertem Polyurethanpolymer (b-2a) zu der Gesamtmenge an anionisch stabilisiertem Polymerisat (b-2b) sowie zu der Gesamtmenge an anionisch stabilisiertem Polyurethan-Poly(meth)acrylat-Hybridpolymer von 0,8 : 0,5 : 0,8 bis 1,2 : 0,7 : 1,1, aufweist. Bei dem anionisch stabilisierten Polyurethanpolymer handelt es sich um dasjenige in Wasser dispergierte Polymer, welches im Zusammenhang mit der Komponente (a) beschrieben wurde. Das anionisch stabilisierte Polymerisat (b-2b) sowie das anionisch stabilisierte Polyurethan-Poly(meth)acrylat-Hybridpolymer (b-2c) wurden zuvor beschrieben.

Das anionisch stabilisierte Bindemittel (b-2), insbesondere eine Mischung aus
- dem im Zusammenhang mit der Pigmentpaste A beschriebenen in Wasser dispergierten anionisch stabilisierten Polyurethanpolymer (b-2a),
- dem zuvor beschriebenen in Wasser dispergierten anionisch stabilisierten Polymerisats (b-2b) sowie
- dem zuvor beschriebenen anionisch stabilisierten Polyurethan-Poly(meth)acrylat-Hybridpolymer (b-2c),
ist in der pigmentfreien Komponente B bevorzugt in bestimmten Gesamtmengen enthalten. Vorzugsweise enthält die pigmentfreie Komponente B das mindestens eine anionisch stabilisierte Bindemittel (b-2), vorzugsweise die zuvor angeführte Mischung aus dem zuvor beschriebenen anionisch stabilisierten Polyurethanpolymer (b-2a), dem anionisch stabilisierten Polymerisat (b-2b) sowie dem anionisch stabilisierten Polyurethan-Poly(meth)acrylat-Hybridpolymer (b-2c), in einer Gesamtmenge von 10 bis 35 Gew.-%, vorzugsweise von 15 bis 30 Gew.-%, insbesondere von 21 bis 25 Gew.-%, jeweils bezogen auf das Gesamtgewicht der pigmentfreien Komponente B. Der Einsatz des anionisch stabilisierten Bindemittels (b-2) in den zuvor angeführten Gesamtmengen führt zu guten mechanischen Eigenschaften. Die mechanischen Eigenschaften können weitergehend gesteigert werden, wenn eine Kombination von drei verschiedenen anionisch stabilisierten Bindemitteln (b-2), insbesondere ein in Wasser dispergiertes anionisch stabilisiertes Polyurethanpolymer (b-2a), ein in Wasser dispergiertes anionisch stabilisiertes Polymerisat (b-2b) sowie ein in Wasser dispergiertes anionisch stabilisiertes Polyurethan-Poly(meth)acrylat-Hybridpolymer (b-2c), in der pigmentfreien Komponente B in den zuvor angeführten Gesamtmengen eingesetzt wird.

Die pigmentfreie Komponente B enthält die wässrige acrylatbasierte Mikrogel-Dispersion (b-1) sowie die zuvor beschriebenen anionisch stabilisierten Bindemittel (b-2) bevorzugt in einer bestimmten Gesamtmenge. Vorzugsweise enthält die pigmentfreie Komponente B die wässrige acrylatbasierte Mikrogel-Dispersion (b-1) sowie das mindestens eine anionisch stabilisierte Bindemittel (b-2), insbesondere eine Mischung aus den zuvor beschriebenen anionisch stabilisierten Bindemitteln (b-2a) und (b-2b), in einer Gesamtmenge von 10 bis 35 Gew.-%, vorzugsweise von 15 bis 30 Gew.-%, insbesondere von 23 bis 27 Gew.-%, jeweils bezogen auf das Gesamtgewicht der pigmentfreien Komponente B. Die zuvor angeführten Gesamtmengen führen zu einer hohen mechanischen Stabilität, insbesondere einer guten Haftung auf der Originallackierung sowie einer hohen Schwitzwasserbeständigkeit und Steinschlaghaftung, der herstellten wässrigen Überzugsmittel. Weiterhin wird eine gute Abdeckung erzielt.

Im Rahmen der vorliegenden Erfindung ist es vorteilhaft, wenn die pigmentfreie Komponente B ein bestimmtes Gewichtsverhältnis der wässrigen acrylatbasierten Mikrogel-Dispersion (b-1) zu dem mindestens einen anionisch stabilisierten Bindemittel (b-2), insbesondere der Mischung der anionisch stabilisierten Bindemittel (b-2a), (b-2b) und (b-2c), aufweist. Es ist daher erfindungsgemäß bevorzugt, wenn die mindestens eine pigmentfreie Komponente B ein Gewichtsverhältnis der Gesamtmenge an wässriger acrylatbasierter Mikrogel-Dispersion (b-1) zu der Gesamtmenge der wässrigen Dispersionen der anionisch stabilisierten Bindemittel (b-2) von 0,02 bis 0,2, insbesondere von 0,05 bis 0,1, jeweils bezogen auf den Feststoffgehalt der Dispersionen, aufweist. Als anionisch stabilisierte Bindemittel (b-2) sind besonders bevorzugt die zuvor genannten wässrigen Dispersionen des anionisch stabilisierten Polyurethanpolymers (b-2a), des anionisch stabilisierten Polymerisats (b-2b) sowie des anionisch stabilisierten Polyurethan-Poly(meth)acrylat-Hybridpolymers (b-2c) enthalten. Der Einsatz der Bindemittel in den zuvor angeführten Gewichtsverhältnissen führt zu einer hervorragenden Stabilisierung der Farbpigmente in dem wässrigen Überzugsmitteln. Hierdurch wird eine hohe Farbtongenauigkeit erreicht. Weiterhin wird eine gute Abdeckung erzielt. Darüber hinaus weisen aus dieser Komponente hergestellte wässrige Überzugsmittel eine hohe mechanische Stabilität, insbesondere eine gute Haftung auf der Originallackierung sowie eine hohe Schwitzwasserbeständigkeit und Steinschlaghaftung, auf.

Die pigmentfreie Komponente B weist ebenfalls einen VOC-Gehalt von weniger oder gleich 250 g/L auf. Um diesen VOC-Gehalt zu erreichen, sollte der Gehalt an organischen Lösungsmitteln in der pigmentfreien Komponente B möglichst gering sein. Eine besonders bevorzugte Ausführungsform des ersten Erfindungsgegenstands ist daher dadurch gekennzeichnet, dass die mindestens eine pigmentfreie Komponente B organisches Lösungsmittel in einer Gesamtmenge von 0 bis 8 Gew.-%, vorzugsweise von 0 bis 7,9 Gew.-%, insbesondere von 0 bis 7,7 Gew.-%, jeweils bezogen auf das Gesamtgewicht der Komponente B, enthält. Unter dem Begriff organisches Lösungsmittel werden flüchtigen Verbindungen verstanden, welche bei 20 °C einen Dampfdruck von mehr als 10 Pascal aufweisen bzw. welche einen Siedebeginn von weniger oder gleich 250 °C bei einem Standarddruck von 101,3 kPa besitzen. Durch den Einsatz von maximal 8 Gew.-% organischer Lösungsmittel in der pigmentfreien Komponente B kann ein VOC-Gehalt von weniger oder gleich 250 g/L erreicht werden.

Bevorzugt handelt es sich auch bei der pigmentfreien Komponente B um eine wässrige Zusammensetzung. Die Komponente B weist daher bevorzugt einen Wassergehalt von 20 bis 90 Gew.-%, insbesondere 30 bis 85 Gew.-%, ganz besonders bevorzugt 50 bis 70 Gew.-%, jeweils bezogen auf das Gesamtgewicht der Komponente B, auf.

### Weitere Bestandteile:

Die mindestens eine pigmentfreie Komponente B kann zudem weitere übliche Additive enthalten, wie sie auch im Rahmen der wässrigen Pigmentpaste A beschrieben sind.

Die Herstellung der pigmentfreien Komponente B erfolgt im Allgemeinen so, dass das die anionisch stabilisierten Bindemittel (b-2a), (b-2b) und (b-2c) vorgelegt und mit allen weiteren Bestandteilen unter Rühren vermischt werden. Anschließend wird die Dispersion filtriert.

Besonders bevorzugte Ausführungsformen AF1 bis AF14 der pigmentfreien Komponente B sind nachfolgend wiedergegeben (alle Mengenangaben bezogen auf das Gesamtgewicht der pigmentfreien Komponente B; werden Dispersionen eingesetzt, beziehen sich alle Mengenangaben auf den Feststoffgehalt der Dispersionen am Gesamtgewicht der pigmentfreien Komponente B).

AF1: Pigmentfreie Komponente B, enthaltend zusätzlich mindestens ein anionisch stabilisiertes Bindemittel (b-2).

AF2: Pigmentfreie Komponente B, enthaltend zusätzlich 21 bis 25 Gew.-% anionisch stabilisiertes Bindemittel (b-2).

AF3: Pigmentfreie Komponente B, enthaltend zusätzlich ein erstes anionisch stabilisiertes Bindemittel (b-2a), ein zweites anionisch stabilisiertes Bindemittel (b-2b) sowie ein drittes anionisch stabilisiertes Bindemittel (b-2c).

AF4: Pigmentfreie Komponente B, enthaltend zusätzlich 6 bis 10 Gew.-% erstes anionisch stabilisiertes Bindemittel (b-2a), 3 bis 6 Gew.-% zweites anionisch stabilisiertes Bindemittel (b-2b) und 6 bis 10 Gew.-% drittes anionisch stabilisiertes Bindemittel (b-2c).

AF5: Pigmentfreie Komponente B, enthaltend 6 bis 9 Gew.-% einer wässrigen acrylatbasierten Mikrogel-Dispersion (b-1), wobei das acrylatbasierte Mikrogel eine Glasübergangstemperatur T_{g} von 50 bis 60°C aufweist, sowie zusätzlich 6 bis 10 Gew.-% erstes anionisch stabilisiertes Bindemittel (b-2a), 3 bis 6 Gew.-% zweites anionisch stabilisiertes Bindemittel (b-2b) und 6 bis 10 Gew.-% drittes anionisch stabilisiertes Bindemittel (b-2c)..

AF6: Pigmentfreie Komponente B, enthaltend ein Gewichtsverhältnis der Gesamtmenge an wässriger acrylatbasierter Mikrogel-Dispersion (b-1) zu der Gesamtmenge der wässrigen Dispersionen der anionisch stabilisierten Bindemittel (b-2) von 0,05 bis 0,1, jeweils bezogen auf den Feststoffgehalt der Dispersionen.

AF7: Pigmentfreie Komponente B, enthaltend ein Gewichtsverhältnis der Gesamtmenge an anionisch stabilisiertem Polyurethanpolymer (b-2a) zu der Gesamtmenge an anionisch stabilisierten Polymerisat (b-2b) zu der Gesamtmenge an anionisch stabilisiertem Polyurethan-Poly(meth)acrylat-Hybridpolymer (b-2c) von 0,8 : 0,5 : 0,8 bis 1,2 : 0,7 : 1,1.

AF8: Pigmentfreie Komponente B, wobei die acrylatbasierte Mikrogel-Dispersion (b-1) der Ausführungsformen AF1 bis AF7 einen Gelanteil von 80 bis 100 %, vorzugsweise von 85 bis 100 %, bevorzugt von 88 bis 98 %, insbesondere von 90 bis 98 %, jeweils bezogen auf den Festkörper der Dispersion, aufweist.

AF9: Pigmentfreie Komponente B, wobei die acrylatbasierte Mikrogel-Dispersion (b-1) der Ausführungsformen AF1 bis AF8 erhältlich ist durch radikalische Emulsionspolymerisation, insbesondere einstufige radikalische Emulsionspolymerisation, von
(i) 60 bis 70 Gew.-%, bezogen auf das Gesamtgewicht der Monomere (i) und (ii), 1,6-Hexandioldiacrylat und
(i) einer Mischung aus 10 bis 90 Gew.-% Hydroxyethyl(meth)acrylat und 10 bis 90 Gew.-%, jeweils bezogen auf das Gesamtgewicht der Monomere (i) und (ii), Methyl(meth)acrylat.

AF10: Pigmentfreie Komponente B, wobei das anionisch stabilisierte Bindemittel (b-2), insbesondere das erste anionisch stabilisierte Bindemittel (b-2a), der Ausführungsformen AF1 bis AF7 ein zahlenmittleres Molekulargewicht Mₙ von 750 bis 2.000.000, vorzugsweise 750 bis 1.000.000, besonders bevorzugt 750 bis 500.000 und insbesondere 950 bis 15.000 Dalton, eine Säurezahl von 5 bis 150, vorzugsweise 10 bis 100, besonders bevorzugt 15 bis 80 und insbesondere 20 bis 35 mg KOH/g und eine OH-Zahl von 1 bis 150, vorzugsweise 2 bis 100, besonders bevorzugt 5 bis 70 und insbesondere 10 bis 25 mg KOH/g aufweist.

AF11: Pigmentfreie Komponente B, wobei das anionisch stabilisierte Bindemittel (b-2), insbesondere das erste anionisch stabilisierte Bindemittel (b-2a), der Ausführungsformen AF1 bis AF7 sowie AF10 eine in Wasser dispergiertes anionisch stabilisierters Polyurethanpolymer ist, wobei das anionisch stabilisierte Polyurethanpolymer erhältlich durch Umsetzung eines NCO-Präpolymers mit einem Modifizierungsmittel in Form eines Polyols, insbesondere Trimethylolpropan, im Äquivalentverhältnis NCO-Präpolymer zu Modifizierungsmittel von 1,1 : 1 bis 1 : 1,1 und wobei das NCO-Präpolymer erhältlich ist durch Umsetzung von
(i) 55 bis 70 Gew.-%, bezogen auf das Gesamtgewicht der Verbindungen (i) bis (iv), mindestens eines Polyesterpolyols mit einer OH-Zahl von 40 bis 100 mg KOH/g, bezogen auf den Feststoffgehalt, und einem zahlenmittleren Molekulargewicht Mₙ von 1000 bis 3000 Da, wobei das Polyesterpolyol keine olefinischen Doppelbindungen enthält,
(ii) 3 bis 7 Gew.-%, bezogen auf das Gesamtgewicht der Verbindungen (i) bis (iv), mindestens einer Alkansäure mit 3 bis 8 Kohlenstoffatomen sowie zwei Hydroxylgruppen am alpha-ständigen Kohlenstoffatom, insbesondere Dimethylolpropionsäure,
(iii) 0,5 bis 3 Gew.-%, bezogen auf das Gesamtgewicht der Verbindungen (i) bis (iv), mindestens einem Polyol der Formel (1) 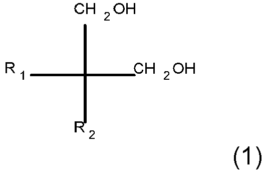 mit R₁ = R₂ = Methyl und
(iv) 25 bis 30 Gew.-%, bezogen auf das Gesamtgewicht der Verbindungen (i) bis (iv), mindestens einem Diisocyanat der Formel (2) 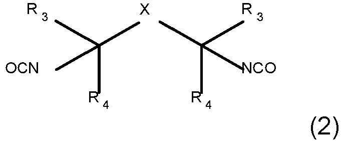 mit X = Dicyclohexylmethylrest und R₃ = R₄ = Wasserstoff.

AF12: Pigmentfreie Komponente B, wobei das anionisch stabilisierte Bindemittel (b-2), insbesondere das zweite anionisch stabilisierte Bindemittel (b-2b), der Ausführungsformen AF1 bis AF7 eine Glasübergangstemperatur Tg von -20 bis -5°C aufweist.

AF13: Pigmentfreie Komponente B, wobei das anionisch stabilisierte Bindemittel (b-2), insbesondere das zweite anionisch stabilisierte Bindemittel (b-2b), der Ausführungsformen AF1 bis AF7 sowie AF12 ein in Wasser dispergiertes anionisch stabilisiertes Polymerisat ist, wobei das anionisch stabilisierte Polymerisat herstellbar ist durch Umsetzung
- einer Mischung (A) von 50 bis 85 Gew.-% eines vinylaromatischen Monomeren und 15 bis 50 Gew.-% eines einfach ungesättigten Esters der (Meth)acrylsäure mit einem Alkylrest,
- einer Mischung (B) von 1 bis 4 Gew.-% eines mehrfach olefinisch ungesättigten Monomers, 60 bis 80 Gew.-% eines einfach ungesättigten Esters der (Meth)acrylsäure mit einem Alkylrest 16 bis 39 Gew.-% eines vinylaromatischen Monomeren, und
- einer Mischung (C) von 8 bis 15 Gew.-% einer alpha-beta ungesättigten Carbonsäure, 10 bis 20 Gew.-% eines einfach ungesättigten Esters der (Meth)acrylsäure mit einem mit einer Hydroxylgruppe substituierten Alkylrest und 65 bis 82 Gew.-% einfach ungesättigter Ester der (Meth)acrylsäure mit einem Alkylrest,
wobei
iv. zunächst die Mischung (A) polymerisiert wird,
v. dann die Mischung (B) in Gegenwart des unter i. hergestellten Polymerisats polymerisiert wird, und
vi. danach die Mischung (C) in Gegenwart des unter ii. hergestellten Polymerisats polymerisiert wird.

AF14: Pigmentfreie Komponente B, wobei das anionisch stabilisierte Bindemittel (b-2), insbesondere das dritte anionisch stabilisierte Bindemittel (b-2c), der Ausführungsformen AF1 bis AF7 ein in Wasser dispergiertes anionisch stabilisiertes Polyurethan-Poly(meth)acrylat-Hybridpolymer ist, wobei das Hybridpolymer erhältlich ist durch radikalische Umsetzung
(iii) eines nichtionischen Polyurethanpolymers mit einem zahlenmittleren Molekulargewicht von 1000 bis 30.000 Da, insbesondere 1500 bis 20.000 Da, und im statischen Mittel pro Molekül 0,05 bis 1,1, insbesondere 0,2 bis 0,9, polymerisierbare Doppelbindungen mit
(iv) mindestens einem ethylenisch ungesättigten Monomeren mit mindestens einer Carbonsäuregruppe
in Gegenwart mindestens eines wasserunlöslichen Initiators,
wobei das Gewichtsverhältnis zwischen nichtionischem Polyurethanpolymer und dem mindestens einen ethylenisch ungesättigten Monomeren von 1 : 10 bis 10 : 1 beträgt.

Die zuvor angeführten Ausführungsformen AF1 bis AF14 der pigmentfreien Komponente B, insbesondere in Kombination mit den im Zusammenhang mit der Komponente A angeführten Ausführungsformen AF1 bis AF12, führen zu einer hohen Farbtongenauigkeit. Die mechanischen Eigenschaften der wässrigen Überzugsmittel, insbesondere die Haftung auf der Originallackierung, die Schwitzwasserbeständigkeit sowie die Steinschlaghaftung, können weitergehend verbessert werden, wenn zusätzlich mindestens ein anionisch stabilisiertes Bindemittel (b-2), insbesondere eine Mischung der zuvor angeführten anionisch stabilisierten Bindemittel (b-2a), (b-2b) und (b-2c), eingesetzt wird.

Es ist erfindungsgemäß, dass die wässrige Pigmentpaste A und die pigmentfreie Komponente B jeweils einen VOC-Gehalt von weniger oder gleich 250 g/L aufweisen. Besonders bevorzugt weisen die wässrige Pigmentpaste A und die pigmentfreien Komponente B jeweils einen VOC-Gehalt von 100 bis 250 g/L auf. Hierdurch wird sichergestellt, dass auch das Mischsystem einen VOC-Gehalt von weniger oder gleich 250 g/L aufweist. Auf diese Weise wird die Menge an organischen Lösungsmitteln, welche während der Anwendung des Mischsystems freigesetzt wird, signifikant gesenkt und dadurch auch die Umweltbelastung stark verringert, jedoch ohne die Farbtongenauigkeit, die Abdeckung sowie die mechanischen Eigenschaften negativ zu beeinflussen.

### Komponente (c):

Neben den zuvor angeführten Komponenten A und B kann das Mischsystem auch weitere Komponenten enthalten. Besonders bevorzugt enthält das Mischsystem noch eine die Rheologie des wässrigen Überzugsmittels steuernde Komponente C. Es ist daher erfindungsgemäß besonders vorteilhaft, wenn das Mischsystem zusätzlich eine Komponente C umfasst, wobei die Komponente C mindestens ein Verdickungsmittel sowie 90 bis 98 Gew.-% Wasser, bezogen auf das Gesamtgewicht der Komponente C, enthält.

Als Verdickungsmittel eignen sich anorganische Verdickungsmittel aus der Gruppe der Schichtsilikate, wie Lithium-Aluminium-Magnesium Silikate. Ebenfalls kann ein organisches Verdickungsmittel, beispielsweise ein (Meth)acrylsäure-(Meth)acrylatCopolymerisat-Verdicker oder ein Polyurethan-Verdicker, wie beispielsweise die bekannten Polyurethan-Assoziativverdicker eingesetzt werden. Als Assoziativverdicker werden wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt. Besonders bevorzugte Verdickungsmittel im Rahmen der vorliegenden Erfindung sind Schichtsilikate, insbesondere Lithium-Aluminium-Silikate.

Die zuvor genannten Verdickungsmittel, insbesondere die Lithium-Aluminium-Schichtsilikate, sind in der Komponente C in einer Gesamtmenge von 0,1 bis 5,0 Gew. %, bevorzugt 0,2 bis 3,0 Gew.-%, insbesondere 0,3 bis 2,0 Gew.-%, jeweils bezogen auf das Gesamtgewicht der Komponente C, enthalten.

### Komponente (d):

Darüber hinaus kann es vorgesehen sein, dass das Mischsystem neben den zuvor beschriebenen Komponenten A, B und C noch eine weitere Komponente D enthält. Bei dieser Komponente D handelt es sich um eine wässrige Pigmentpaste, welche mindestens ein Effektpigment sowie mindestens ein anionisch stabilisiertes Bindemittel und/oder mindestens ein nichtionisch stabilisiertes Bindemittel enthält. Im Gegensatz zu der Komponente A enthält die Komponente D keine Farbpigmente, der Anteil an Farbpigmenten in der Komponente D beträgt daher 0 Gew.-%, bezogen auf das Gesamtgewicht der Komponente D. Besonders bevorzugt enthält die Komponente D mindestens ein Effektpigment, mindestens ein anionisch stabilisiertes Bindemittel und mindestens ein nichtionisch stabilisiertes Bindemittel. Eine ganz besonders bevorzugte Ausführungsform der Komponente D enthält - jeweils bezogen auf das Gesamtgewicht der Komponente D-
- 5 bis 35 Gew.-% mindestens eines Effektpigments,
- 5 bis 30 Gew.-% eines anionisch stabilisierten Bindemittels,
- 0,1 bis 12 Gew.-% eines nichtionisch stabilisierten Bindemittels.

Als Effektpigmente, anionisch und nichtionisch stabilisierte Bindemittel sind die im Zusammenhang mit der Komponente A beschriebenen Effektpigmente, anionisch stabilisierten Bindemittel (a-2) und nichtionisch stabilisierten Bindemittel (a-3) enthalten.

Im Rahmen der vorliegenden Erfindung ist es besonders bevorzugt, wenn das Mischsystem mindestens 1 bis 100 Komponenten D umfasst.

### Komponente (e):

Zudem kann es vorgesehen sein, dass das erfindungsgemäße Mischsystem eine weitere pigmentfreie Komponente E enthält, welche von der pigmentfreien Komponente B verschieden ist. Die weitere pigmentfreie Komponente E enthält neben der wässrigen acrylatbasierten Mikrogel-Dispersion (b-1) die zuvor angeführten anionisch stabilisierten Bindemittel (b-2a) und (b-2b).

Im Rahmen der vorliegenden Erfindung kann das Mischsystem mindestens 1 bis 3 Komponenten E umfassen.

### Komponente (f):

Weiterhin kann das Mischsystem mindestens eine Vernetzerkomponente F, enthaltend mindestens ein Vernetzungsmittel, umfassen. Beispiele für derartige Vernetzungsmittel sind Aminoplastharze, Polyisocyanate, sowie blockierte Polyisocyanate, wie sie in der Offenlegungsschrift EP 0 614 951 A2 beschrieben sind. Neben dem Vernetzungsmittel können Bindemittel enthalten sein. Vorzugsweise sind die gleichen Bindemittel wie in der pigmentfreien Komponente B enthalten.

Besonders bevorzugt weisen die Komponenten C, D, E und F ebenfalls jeweils einen VOC-Gehalt von 0 bis 250 g/L, insbesondere von 100 bis 250 g/L, auf.

Eine bevorzugte Ausführungsform des erfindungsgemäßen Mischsystems ist ein Mischsystem, bei welchem alle Pigmentpasten A und gegebenenfalls D das gleiche bzw. im Falle einer Bindemittelmischung die gleichen Bindemittel enthalten. Hierdurch wird eine gute Mischbarkeit sowie eine gute Verträglichkeit der Komponenten des Mischsystems sichergestellt.

Besonders bevorzugte Mischsysteme der vorliegenden Erfindung enthalten die nachfolgenden Komponenten:
(a) mindestens eine, insbesondere 1 bis 100, zuvor beschriebene wässrige Pigmentpaste(n) A,
(b) mindestens eine zuvor beschriebene pigmentfreie Komponente B,
(c) mindestens eine zuvor beschriebene Komponente C
(d) mindestens eine, insbesondere 1 bis 100, zuvor beschriebene wässrige Pigmentpaste(n) D
(e) gegebenenfalls mindestens eine zuvor beschriebene pigmentfreie Komponente E und
(f) gegebenenfalls mindestens eine zuvor beschriebene Vernetzerkomponente F.

Je nach gewünschtem Farbton des wässrigen Überzugsmittels werden dann zur Herstellung des wässrigen Überzugsmittels eine oder mehrere Komponenten (a) des Mischsystems mit mindestens einer Komponente (b), gegebenenfalls mindestens einer Komponente (c) und gegebenenfalls einer oder mehrerer Komponenten (d) und (f) direkt vor der Applikation des wässrigen Überzugsmittels gemischt.

Der zweite Gegenstand der vorliegenden Erfindung betrifft daher ein Verfahren zur Herstellung von wässrigen Überzugsmitteln mit einem VOC-Gehalt von 0 bis 250 g/L, insbesondere von 100 bis 250 g/L, durch Vermischen von mindestens zwei wässrigen Komponenten, dadurch gekennzeichnet, dass ein erfindungsgemäßes Mischsystem eingesetzt wird und die wässrigen Überzugsmittel durch Mischen der Pigmentpaste A mit der pigmentfreien Komponente B und gegebenenfalls der Komponente C hergestellt werden.

Die verschiedenen wässrigen Pigmentpasten A und gegebenenfalls D werden zur Herstellung der wässrigen Überzugsmittel in einem solchen Verhältnis gemischt, dass der gewünschte Farbton resultiert. Das Mischungsverhältnis der Komponente A und gegebenenfalls D mit der oder den verschiedenen Komponenten B wird durch die Forderung bestimmt, dass das resultierende Überzugsmittel unabhängig vom Farbton die gewünschte Viskosität, den gewünschten Festkörpergehalt und den gewünschten Gehalt an organischen Lösemitteln usw. aufweist. Weiterhin wird das Mischungsverhältnis durch die erforderlichen technologischen Eigenschaften, beispielsweise die Haftung, bestimmt.

Die aus dem erfindungsgemäßen Mischsystem hergestellten wässrigen Überzugsmittel weisen einen VOC-Gehalt von 0 bis 250 g/L, insbesondere von 100 bis 250 g/L, auf. Eine besonders bevorzugte Ausführungsform des zweiten Erfindungsgegenstands ist daher dadurch gekennzeichnet, dass das wässrige Überzugsmittel organische Lösungsmittel in einer Gesamtmenge von 0 bis 7 Gew.-%, insbesondere von 0 bis 6 Gew.-%, jeweils bezogen auf das Gesamtgewicht des Überzugsmittels, enthält. Bezüglich der Definition der organischen Lösungsmittel gilt das für die Komponente A und B vorstehend gesagte.

Die aus den erfindungsgemäßen Mischsystem hergestellten wässrigen Überzugsmittel weisen eine hervorragende Farbtongenauigkeit, eine gute Abdeckung sowie gute mechanische Eigenschaften, insbesondere eine gute Haftung auf der Originallackierung sowie eine hohe Schwitzwasserbeständigkeit und Steinschlaghaftung, auf.

Die unter Verwendung des erfindungsgemäßen Mischsystems hergestellten wässrigen Überzugsmittel können auf die verschiedensten Substrate, wie z. B. Metall, Holz, Kunststoff oder Papier aufgebracht werden. Insbesondere eignen sich die mittels des erfindungsgemäßen Mischsystems hergestellten wässrigen Überzugsmittel für die Reparaturlackierung von Schadstellen, insbesondere für die Autoreparaturlackierung. Die Überzugsmittel werden in diesem Fall direkt nach ihrer Herstellung durch Mischen der Komponenten (a) und (b) sowie gegebenenfalls der weiteren Komponenten (c), (d) und (f) auf die entsprechend vorbereitete Schadstelle (z. B. durch Spachteln und Füllern) mittels üblicher Methoden, insbesondere Spritzen, aufgebracht. Hierbei ist es besonders bevorzugt, wenn zwischen dem mehrmaligen Aufbringen der wässrigen Überzugsmittel kein Ablüften erfolgt. Bevorzugt werden die unter Verwendung des erfindungsgemäßen Mischsystems hergestellten wässrigen Überzugsmittel zur Erzeugung einer Basisschicht eingesetzt.

Nach Antrocknung der so hergestellten Basisschicht bei Raumtemperatur oder durch forcierte Trocknung (z. B. 10 min. bei 60°C, 80°C oder IR-Trocknung) wird eine geeignete transparente Deckbeschichtungszusammensetzung aufgebracht. Als Decklack geeignet sind sowohl organisch gelöste als auch wässrige 1- oder 2-Komponenten-Klarlacke sowie Pulverklarlacke. Häufig eingesetzt werden 2-Komponenten-Klarlacke auf Basis eines hydroxylgruppenhaltigen Acrylatcopolymerisates und eines Polyisocyanates. Derartige Klarlacke sind beispielsweise in den Patentanmeldungen DE 34 12 534, DE 36 09 519, DE 37 31 652 und DE 38 23 005 beschrieben. Geeignete 1-Komponenten-Klarlacke, beispielsweise auf Basis eines hydroxylgruppenhaltigen Bindemittels und eines Aminoharzhärters sind ebenfalls bekannt und beispielsweise im Kittel, Lehrbuch der Lacke und Beschichtungen, Band IV; Verlag W.A. Colomb in der H. Heeremann GmbH, Berlin-Oberschwandorf 1976 beschrieben. Selbstverständlich sind aber auch alle anderen, hier nicht explizit genannten Klarlacke geeignet.

Nach einer ggf. erforderlichen Ablüftzeit von etwa 5 Minuten wird dann die Basisschicht zusammen mit der Deckschicht getrocknet. Bei Verwendung von 2-Komponenten-Klarlacken erfolgt die Trocknung im Allgemeinen bei Temperaturen von unter 100°C, bevorzugt von unter 80°C. Die Trockenfilmschichtdicken der Basisschicht liegen im Allgemeinen zwischen 5 und 25 µm, die der Deckschicht im Allgemeinen zwischen 30 und 70 µm.

Bei Verwendung von 1-Komponenten-Klarlacken wird die Basisschicht zusammen mit der Deckschicht bei erhöhten Temperaturen, z. B. ca. 120°C, getrocknet. Die Trockenfilmschichtdicken der Deckschicht liegen hier im Allgemeinen zwischen 30 und 50 µm.

Bezüglich weiterer Ausführungsformen des erfindungsgemäßen Verfahrens, insbesondere bezüglich der zur Herstellung der wässrigen Überzugsmittel verwendeten Komponenten, gilt mutatis mutandis das in Bezug auf das erfindungsgemäße Mischsystem gesagte.

Schließlich ist ein dritter Gegenstand der vorliegenden Erfindung die Verwendung eines erfindungsgemäßen Mischsystems zur Herstellung von wässrigen Überzugsmitteln für die Reparaturlackierung und/oder für die Beschichtung von Automobilkarossen und/oder Kunststoffteilen.

Bezüglich weiterer Ausführungsformen der erfindungsgemäßen Verwendung, insbesondere bezüglich des verwendeten Mischsystems, gilt mutatis mutandis das in Bezug auf das erfindungsgemäße Mischsystem sowie auf das erfindungsgemäße Verfahren Gesagte.

### Beispiele

### Methodenbeschreibung:

### 1. Feststoffgehalt (Festkörper, nicht flüchtiger Anteil)

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 110 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil. Das Volumen des nicht-flüchtigen Anteils kann falls erforderlich gegebenenfalls gemäß DIN 53219 (Datum: August 2009) bestimmt werden.

### 2. Glasübergangstemperatur T_{g}

Die Glasübergangstemperatur T_{g} wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

### 3. Teilchengröße

Die Bestimmung der Teilchengröße der Polymerisate erfolgt mittels dynamischer Lichtstreuung nach DIN ISO 13321 (Oktober 2004). Im Rahmen der vorliegenden Erfindung ist unter Teilchengröße der gemessene mittlere Partikeldurchmesser (Z-Average mean) zu verstehen.

### 4. Ermittlung des Gehalts an freien NCO-Gruppen

Die Ermittlung des Gehalts an freien Isocyanatgruppen, im Folgenden auch als NCO-Gehalt bezeichnet, wird durch Zugabe eines Überschusses einer 2%igen N,N'-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0.1N Salzsäure gemäß DIN EN ISO 3251 , DIN EN ISO 11909 und DIN EN ISO 14896 bestimmt. Über den Anteil eines Polymerisats (Festkörper) in Lösung kann auf den NCO-Gehalt des Polymerisats bezogen auf Festkörpergehalt zurückgerechnet werden.

### 5. Bestimmung der Säurezahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, welche zur Neutralisation von 1 g Probe unter den in der DIN EN ISO 2114 festgelegten Bedingungen erforderlich ist. Die angegebene Säure-Zahl entspricht dabei der in der DIN-Norm angegebenen Gesamtsäurezahl, bezogen auf den Festkörper.

### 6. Bestimmung der OH-Zahl

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist und ist hierbei auf den Festkörper bezogen.

### 7. Bestimmung des zahlen- und gewichtsmittleren Molekulargewichts

Die Bestimmung des zahlenmittleren Molekulargewichts (Mₙ) erfolgt mittels Gel-Permeations-Chromatographte (GPC) gemäß DIN 55672-1 (Datum: August 2007). Neben dem zahlenmittleren Molekulargewicht können mit dieser Methode zudem das gewichtsmittlere Molekulargewicht (M_{w}) sowie die Polydispersität d (Verhältnis von gewichtsmittlerem Molekulargewicht (M_{w}) zu zahlenmittlerem Molekulargewicht (Mₙ₎) bestimmt werden. Als Eluent wird Tetrahydrofuran eingesetzt. Die Bestimmung erfolgt gegen Polymethylmethacrylat-Standards. Das Säulenmaterial besteht aus Styrol-Divinylbenzol-Copolymeren.

### 8. Herstellung von Mehrschichtaufbauten

### 8.1 Erfindungsgemäßes Mischsystem

Zur Beurteilung der Eigenschaften wässriger Überzugsmittel, welche unter Verwendung des erfindungsgemäßen Mischsystems erhalten werden, werden Mehrschichtlackierungen nach der folgenden allgemeinen Vorschrift hergestellt:
Ein mit einer Standard-KTL (CathoGuard^{®} 580 Schwarz der Firma BASF Coatings) beschichtetes Stahlblech wird angepadded (manuelles Anrauen des Substrates mit einem Schleifvlies 3M^{™} Scotch-Brite^{™}) und anschließend mit einem Reinigungsmittel (Glasurit^{®} 700-1) gereinigt. Zunächst wird mit Hilfe einer Spritzpistole (SATAjet^{®} HVLP 4000, Eingangsdruck: 2 bar, Druck an der Düse: 0,7 bar) ein handelsüblicher Füller (Glasurit^{®} 285-270 Grundfüller Pro, Glasurit^{®} 929-58 Füllerhärter Pro und Glasurit^{®} 352-91 Einstellzusatz im Volumenverhältnis 5:1 :1) in 2 Spritzgängen appliziert und anschließend für 30 Minuten bei 60 °C getrocknet; die resultierende Trockenschichtdicke soll 60 µm betragen.

Nach dem Anschleifen mittels eines Exzenterschleifers (Haftschleifblätter 150 mm P 500) und anschließenden Reinigen mit einem Reinigungsmittel (Glasurit^{®} 700-1) wird mit einer Spritzpistole (SATAjet^{®} HVLP 4000, Eingangsdruck: 2 bar, Druck an der Düse: 0,7 bar) das jeweilige wässrige Überzugsmittel in zwei Spritzgänge ohne zwischenzeitliches Ablüften (also Nass-in-Nass-Applikation) aufgebracht und anschließend abgelüftet, bis die Oberfläche gleichmäßig matt erscheint. Die resultierende Gesamttrockenschichtdicke des jeweiligen Beschichtungsmittels soll dabei 10 bis 20 µm betragen. Im Anschluss erfolgt in zwei Spritzgängen die Applikation eines handelsüblichen Klarlackes (Glasurit^{®} 923-335 HS-Multi-Klarlack und Glasurit^{®} 929-33 Härter im Volumenverhältnis 2:1 sowie auf diese Mischung ein 10%iger Volumenanteil Glasurit^{®} 352-91 I) mit einer Zieltrockenschichtdicke von 50-60 µm. Die Trocknung wird für 30 Minuten bei 60 °C durchgeführt.

### 8.2 Nicht erfindungsgemäßes Mischsystem (Glasurit^{®} Reihe 90)

Zur Beurteilung der Eigenschaften von wässrigen Überzugsmitteln, welche unter Verwendung eines nicht erfindungsgemäßen Mischsystems (Glasurit^{®} Reihe 90) erhalten werden, werden Mehrschichtlackierungen nach der folgenden allgemeinen Vorschrift hergestellt:
Ein mit einer Standard-KTL (CathoGuard^{®} 580 Schwarz der Firma BASF Coatings) beschichtetes Stahlblech wird angepadded, gereinigt und anschließend mit einem handelsüblichen Füller beschichtet, wie unter Punkt 8.1 beschrieben.

Nach dem Anschleifen mittels eines Exzenterschleifers (Haftschleifblätter 150 mm P 500) und anschließenden Reinigen mit einem Reinigungsmittel (Glasurit^{®} 700-1) wird mit einer Spritzpistole (SATAjet^{®} HVLP 4000, Eingangsdruck: 2 bar, Druck an der Düse: 0,7 bar) das jeweilige wässrige Überzugsmittel in zwei bis drei Spritzgängen aufgebracht, wobei nach jedem Spritzgang für 5 Minuten abgelüftet wird, bis die Oberfläche gleichmäßig matt erscheint. Die resultierende Gesamttrockenschichtdicke des jeweiligen Beschichtungsmittels soll dabei 10 bis 15 µm betragen. Im Anschluss erfolgt in zwei Spritzgängen die Applikation eines handelsüblichen Klarlackes, wie unter Punkt 8.1 beschrieben. Die Trocknung wird für 30 Minuten bei 60 °C durchgeführt.

### 9. Bestimmung der Beständigkeit gegen Feuchtigkeit

Für die Bestimmung der Beständigkeit von wässrigen Überzugsmittel sowie Vergleichszusammensetzungen gegenüber Feuchtigkeit werden entsprechend lackierte Substrate gemäß DIN EN ISO 6270-2 (Datum: September 2005) über einen Zeitraum von 10 Tagen in einer Klimakammer nach Prüfklima CH einem Kondenswasser-Konstantklima-Test unterzogen. Anschließend wurden die Bleche 1 Stunde bzw. 24 Stunden nach Entnahme aus der Klimakammer visuell bezüglich Blasenbildung untersucht.

Das Auftreten von Blasen wird folgendermaßen beurteilt:
Die Anzahl der Blasen wird durch eine Mengenangabe von 0 bis 5 bewertet, wobei mit 1 sehr wenige und 5 sehr viele Blasen bezeichnet werden.

Zur Beurteilung der technologischen Eigenschaften der Mehrschichtaufbauten nach Schwitzwasserbelastung werden Gitterschnitte nach DIN EN ISO 2409 durchgeführt (Note 0 bis 5; 0 = bester Wert; 5 = schlechtester Wert).

### 10. Bestimmung der Haftungseigenschaften im Steinschlagtest

Die Beurteilung der Mehrschichtlackierungen bzgl. Steinschlaghaftung erfolgt nach DIN EN ISO 20567-1 (April 2007), Verfahren B. Die Beurteilung des sich ergebenden Schadensbildes erfolgt ebenfalls nach DIN EN ISO 20567-1.

### 11. Bestimmung der Trockenschichtdicken

Die Bestimmung der Schichtdicken erfolgt nach DIN EN ISO 2808 (Datum: Mai 2007), Verfahren 12A unter Verwendung des Messgerätes MiniTest^{®} 3100 - 4100 der Firma ElektroPhysik.

### 12. Bestimmung des VOC-Gehalts

Die Bestimmung des VOC-Gehalts der wässrigen Reparaturbeschichtungsmittel erfolgt gemäß DIN ISO 11890-1 oder DIN ISO 11890-2 (September 2009).

### 13. Bestimmung des Gelanteils des wässrigen Mikrogels

Der Gelanteil kann gravimetrisch bestimmt werden, indem die Dispersion gefriergetrocknet wird, die Gesamtmasse des gefriergetrockneten Polymers bestimmt wird und das Polymer anschließend 24 Stunden bei 25°C in einem Überschuss an Tetrahydrofuran (Verhältnis Tetrahydrofuran zu gefriergetrocknetem Polymer = 300 : 1 ) extrahiert wird. Der unlösliche Anteil wird abgetrennt und bei 50°C vier Stunden lang im Umluftofen getrocknet. Im Anschluss wird der getrocknete, unlösliche Anteil gewogen und der Quotient mit der Gesamtmasse des gefriergetrockneten Polymers gebildet. Der erhaltene Wert entspricht dem Gelanteil.

### 14. Prüfung der Beständigkeit von Beschichtungen gegen Druckwasserstrahl

Die Prüfung der gemäß Punkt 8 hergestellten Mehrschichtaufbauten mittels Druckwasserstrahl erfolgt gemäß der DIN EN ISO 16925 (2014-06).

### 15. Gefrier-Tau-Stabilität

Zunächst werden der pH-Wert (gemessen bei 23 °C) sowie die Viskosität bei einer Scherbelastung von 10 s⁻¹, 100 s⁻¹ und 1000 s⁻¹ (gemessen mittels eines Rotations-Viskosimeters (Gerät Rheolab QC mit Temperiersystem C-LTD80/QC der Firma Anton Paar) bei 23 °C) der entsprechenden wässrigen Pigmentpaste bestimmt. Anschließend werden 200 g der entsprechenden wässrigen Pigmentpaste in einer dicht verschlossenen Glasflasche 8 h bei -18 °C gelagert und dann 16 h bei Raumtemperatur aufbewahrt. Dieser Vorgang wird noch drei Mal wiederholt. Anschließend wird erneut der pH-Wert sowie die Viskosität bestimmt und die Pigmentpaste hinsichtlich des Absetzverhaltens beurteilt.

### Ausführungsbeispiele

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten jeweils um Gewichtsprozente.

### 1. Herstellung der Bindemittel für die Komponenten A, B und gegebenenfalls D und E

### 1.1 Herstellung des in Wasser dispergierten anionisch stabilisierten Polyurethanpolymers D1 [(a-2) sowie (b-2a)1

1.1.1 Herstellung des Polyesterharzes PE1 55 Gew.-% einer handelsüblichen Dimerfettsäure (Jodzahl von 10 mg J₂/g, Monomerengehalt von max. 0,1%, Trimergehalt von maximal 2%, Säurezahl von 195 bis 200 mg KOH/g, Verseifungszahl von 197 bis 202 mg KOH/g), 30 Gew.-% 1,6-Hexandiol und 15 Gew.-% Isophthalsäure werden unter Zugabe von Cyclohexan als Schleppmittel bis zu einer Säurezahl (bestimmt auf nichtflüchtigen Anteil) von 3 bis 4 mg KOH/g kondensiert. Gegebenenfalls vorhandenes Cyclohexan wird im Vakuum entfernt und der Polyester mittels Methylethylketon auf einen Feststoffgehalt von 73% angelöst. Das so erhaltene Polyesterharz PE1 weist eine OH-Zahl (fest) von 71 bis 75 mg KOH/g sowie ein berechnetes Molekulargewicht von 1400 D auf.

### 1.1.2 Herstellung des in Waser dispergierten anionisch stabilisierten Polyurethanpolymers D1 [(a-2) sowie (b-2a)]

Unter Stickstoff als Schutzgasatmosphäre werden 4,36 Teile Dimethylolpropionsäure, 23,5 Teile Dicyclohexylmethan-4,4'-diisocyanat, 0,9 Teile Neopentylglykol und 48,75 Teile des Polyesters PE1 zusammengegeben. Nach Zugabe von Methylethylketon wird die Mischung (bei einem Festkörpergehalt von 67 ±1%) bei 80 - 82°C unter Rühren zur Reaktion gebracht. Kontrolliert wird die Reaktion durch Bestimmung des Isocyanatgehaltes der Lösung. Bei Erreichen eines konstanten Wertes für den Isocyanatgehalt von 1,0 bis 1,2% (auf Lösung) wird durch Zugabe von Trimethylolpropan (TMP) zur Kettenverlängerung in einem Verhältnis NCO : TMP von 1: 1,1 das Präpolymer zu einem OH-funktionellen Polyurethanpolymer mit einer rechnerischen OH-Zahl von 17 mg KOH/g (bezogen auf Festharz) umgesetzt. Das Polymer wird dann zu 70% mit N,N'-Dimethylethanolamin neutralisiert und durch Zugabe von Wasser sowie eines Polypropylenglykols mit einer mittleren Molmasse von 900D dispergiert. Anschließend wird das Methylethylketon abdestilliert. Die so erhaltene anionische Polyurethanpolymerdispersion weist einen Feststoffgehalt von 29 - 31% und einen pH-Wert von 7,7 auf und enthält, bezogen auf den Polyurethanpolymergehalt, 20% Polypropylenglykol.

### 1.2 Herstellung des in Wasser dispergierten nichtionisch stabilisierten Acrylatpolymers D2 [(a-3)]

In einem Rührkessel, ausgestattet mit 2 separaten Zuleitungen, Ankerrührer und Thermometer wird ein Gemisch aus Butylgykol und Wasser (1:1) vorgelegt. Anschließend wir der Rührkessel mittels Stickstoff mit einem absoluten Druck von 2,5 bar beaufschlagt. Unter fortwährendem Rühren wird über eine Zuleitung wird ein Gemisch aus 3,7 Teilen Butylglykol und 6,4 Teilen tert.-butyl-peroxy-2-ethylhexanoat innerhalb 4h 45 Minuten zudosiert. Über den zweiten Zulauf dosiert man ein Gemisch aus 26 Teilen Methacrylsäureester des Methoxypolyethlenglykols mit eine mittleren Molmasse von 2000 D als 50%ige wässrige Lösung (z.B. BisomerS20W^{®} der GEO Speciality Chemicals), 8,55 Teilen Styrol, 4,7 Teilen n-Butylacrylat, 8,34 Teile N-(2-Methacryloyloxyethyl)ethylen-Harnstoff als 50%ige wässrige Lösung, 3,36 Teilen Methylmethacrylat 0,84 Teilen N,N'-Dimethylaminopropylmethacrylamid, 6,5 Teilen Hydroxyethylmethacrylat sowie 18,5 Teilen Butylglykol innerhalb von 4 Stunden 30 Minuten, wobei der zweite Zulauf 15 Minuten nach Beginn des ersten Zulaufes gestartet wird.

Nach einer Nachpolymerisationsphase von 60 Minuten wird mit Butylglykol auf ein Verhältnis Wasser: Butylglykol = 45:55 eingestellt bei einem Feststoffgehalt von 45% ± 1%. Die Säurezahl des Harzes beträgt 4,0 bis 6,0 mg KOH/g, bezogen auf den Feststoffgehalt.

### 1.3 Herstellung der wässrigen acrylatbasierten Mikrogel-Dispersion D3 [(b-1)1

In einem Reaktionskessel, ausgestattet mit Rührer, Thermometer, 2 Zuläufen und einem Rückflusskühler werden unter Stickstoff 50,73 Teile Wasser sowie 0,6 Teile Aerosol MA 80 Surfactant vorgelegt. Die Monomerenvorlage wird befüllt mit 0,25 Teilen Aerosol MA 80 Surfactant, 0,6 Teilen Aerosol EF 800 Surfactant, 603 Teilen Hexandioldiacrylat, 12,605 Teilen Methylmethacrylat, 2,105 Teilen Hydroxypropylmethacrylat sowie 0,151 Teilen deionisiertem Wasser.

Die Initiatorvorlage wird befüllt mit 7,5 Teilen deionisiertem Wasser in dem 0,255 Teile Ammoniumperoxydisulfat gelöst sind.

Bei 83°C Reaktortemperatur werden innerhalb von 10 Minuten 10% der Initiatorvorlage zudosiert, der Reaktor wird dann weitere 15 Minuten bei 83°C gehalten. Dann wird mit dem Zulauf der Monomerenmischung und der Initiatormischung gleichzeitig begonnen, die Monomerenmischung wird innerhalb von 180 Minuten, die Initiatorlösung innerhalb von 210 Minuten zudosiert. Anschließend wird die Monomerenvorlage mit 0,5 Teilen deionisiertem Wasser und die Initiatorvorlage mit 0,37 Teilen deionisiertem Wasser gespült. Die Spülmengen werden der Reaktionsmischung zugeführt. Es wird noch weitere 60 Minuten bei 83°C gehalten, dann wird die Polymerdispersion abgelassen und der Reaktor mit 0,628 Teilen deionisiertem Wasser gespült, wobei die Spülmenge ebenfalls der Polymerdispersion zugeführt wird. Anschließend wird mit einem Filterbeutel bei 5 µm filtriert. Man erhält eine weiße Dispersion mit einem Feststoffgehalt von 22 ± 1%, gemessen bei 110°C für 60 Minuten. Die zahlenmittlere Teilchengröße liegt bei 130 bis 230 nm.

### 1.4 Herstellung des in Wasser dispergierten mindestens einen anionisch stabilisierten Polymerisats D4 [(b-2b)]

Die Herstellung des in Wasser dispergierten Polymerisats erfolgt wie in der Offenlegungsschrift WO 2017/088988 A1 für das Beispiel BM2 beschrieben.

Die hergestellte Dispersion D4 weist einen Festkörper von 25,5 %, eine Teilchengröße von 240 nm sowie eine Glasübergangstemperatur T_{g} von -9°C auf.

### 1.5 Herstellung des in Wasser dispergierten anionisch stabilisierten Polyurethan-(Meth)acrvlat-Hvbridpolvmers D5 [(b-2c]]

### 1.5.1 Polyurethan-Vorstufe

In einem Rührkessel, ausgestattet mit einem Ankerrührer, Thermometer und einem Rückflusskühler werden 53 Teile des Polyesterharz PE1, 0,05 Teile Dibutyl-Zinndilaurat, 2,1 Teile Neopentylglykol, 0,7 Teile Trimethylolpropanmonoallylether, 16,5 Teile Dicyclohexylmethan-4,4'-diisocyanat (CAS-Nr.: 5124-30-1), sowie 22,5 Teile Methylethylketon bei 80°C solange gehalten, bis ein NCO-Gehalt der Lösung von 1,0 - 1,2% erreicht ist. Nach Erreichen der Kennzahlen wird das so erhaltene Isocyanat-präpolymer mit Diethanolamin umgesetzt wobei die Menge des Diethanolamins äquimolar zur Menge des Isocyanates berechnet wird. Anschließend wird mit Methylethylketon auf einen Feststoffgehalt von 60 bis 62% eingestellt.

### 1.5.2 Acrylatstufe

In einem Rührkessel, ausgestattet mit 2 separaten Zuleitungen, Ankerrührer und Thermometer werden 24 Teile der Polyurethan-Vorstufe vorgelegt. Mittels Stickstoff wird im Reaktor eine Schutzgasatmosphäre erzeugt. 2,7 Teile n-Butylacrylat, 2,6 Teile Butylmethacrylat, 8 Teile Methylmethacrylat sowie 1,13 Methacrylsäure werden innerhalb 3 Stunden zudosiert. Parallel wird ein Gemisch aus 3 Teilen Methylethylketon und 0,7 Teilen tert.-butyl-per-2-ethylhexanoatüber 3h und 45 Minuten ebenfalls in den Kessel dosiert, der 2. Zulauf startet dabei 15 Minuten vor dem 1. Zulauf. Die Temperatur des Kessels wird dabei auf 80°C gehalten. Nach einer Nachpolymerisationsphase von 60 Minuten werden 0,9 Teile N,N'-Dimethylethanolamin und anschließend 50 Teile Wasser innerhalb von 1h zudosiert. Anschließend wird Vakuum angelegt und das Methylethylketon vollständig abdestilliert. Durch Zugabe von Wasser wird der Feststoffgehalt dann auf 35% eingestellt. Man erhält eine weiße Dispersion mit einer Säurezahl von 28 bis 30 mg KOH/g, bezogen auf den Feststoffgehalt, mit einem pH-Wert von 8,5 bis 9,0.

### 2. Herstellung von wässrigen Pigmentpasten A

### 2.1 Schichtsilikatlösung SL

3 Gew.-% eines Schichtsilikats (Laponite RD) werden mit 0,1 Gew.-% eines Biozids (Acticide MBR1) und 3% Polypropylenglykol (Pluriol P900, erhältlich von der Firma BASF SE) in deionisiertem Wasser dispergiert.

### 2.2 Schwarze Basisfarbe 1

In eine Mischung von 14,8 Teilen D2, 53,6 Teilen D1 und 13,5 Teilen Wasser werden 1 Teil lösemittelfreies Netzmittel (BYK 345), 2,4 Teile Butylglykol, 1,5 Teile einer 10%igen N,N'-Dimethylethanolamin-Lösung, 0,5 Teile eines handelsüblichen oberflächenaktiven Additivs (BYK 199), 1,5 Teilen Talkum und 4,4 Teile Ruß (Colour Black FW171) unter starker Scherung eingerührt. Die Mischung wird auf einer Perlmühle dispergiert, mit weiteren 1,5 Teilen Wasser, 5 Teilen D1 sowie 0,3 Teilen eines handelsüblichen PUR-Verdickers (Acrysol RM8) komplettiert und anschließend filtriert. Die resultierende schwarze Basisfarbe 1 hat einen VOC-Wert von 186 g/L.

### 2.3 Schwarze Basisfarbe 2

In eine Mischung von 15,5 Teilen D2, 9,9 Teilen Wasser, 1 Teil eines handelsüblichen lösemittelfreien Netzmittels (BYK 345) und 2,5 Teilen Butylglykol werden 1 Teil einer 10% N,N'-Dimethylethanolamin-Lösung, 0,3 Teile eines handelsüblichen oberflächenaktiven Additivs (BYK 199), 1,5 Teilen Talkum und 3,3 Teile Ruß (Colour Black FW171) bei hoher Scherrate eingerührt. Anschließend werden 54 Teile D1 und 3,2 Teile Wasser langsam zudosiert. Die Mischung wird auf einer Rührwerksmühle dispergiert, mit 2,5 Teilen Wasser, weiteren 5 Teilen D1 und 0,3 Teilen eines handelsüblichen PUR-Verdickers (Acrysol RM8) komplettiert und anschließend filtriert. Die resultierende schwarze Basisfarbe 2 weist einen VOC von 191,8 g/L auf.

### 2.4 Rote Basisfarbe 1

Zu einer Mischung von 21 Teilen D2, 17,6 Teilen Wasser und 1,25 Teilen 1-Propoxy-2-propanol werden unter Rühren 15 Teile eines Rotpigments (Pigment red 177) gegeben. Anschließend werden der Mischung 3 Teile Wasser, 0,2 Teile einer 10%igen N,N'-Dimethylethanolamin-Lösung, 0,25 Teile eines handelsüblichen Dispergieradditivs (Disperbyk 180) und 31,7 Teile D1 zugefügt. Die Mischung wird auf einer Perlmühle dispergiert, danach mit 4,5 Teilen Wasser und 5,5 Teilen D1 komplettiert und schließlich filtriert. Die rote Basisfarbe 1 hat einen VOC von 221 g/L.

### 2.5 Rote Basisfarbe 2

Zu einer Mischung von 20 Teilen D2 und 11,1 Teilen Wasser werden unter starkem Rühren 0,4 Teile einer 10%igen N,N'-Dimethylethanolamin-Lösung und 0,25 Teile eines handelsüblichen oberflächenaktiven Additivs (BYK 199) sowie 3 Teile 1-Propoxy-2-propanol, 25 Teile Rotpigment (Pigment red 254), 5 Teile Wasser und 20 Teile D1 gegeben. Die homogene Mischung wird auf einer Perlmühle dispergiert, im Anschluss daran mit 7,75 Teilen Wasser und weiteren 7,5 Teilen D1 komplettiert und abschließend filtriert. Die rote Basisfarbe 2 hat einen VOC von 217,3 g/L.

### 2.6 Rote Basisfarbe 3

Zu einer Mischung von 20,3 Teilen D2 und 18 Teilen Wasser werden 1 Teil hydrophobierte pyrogene Kieselsäure (Aerosil R972) und 18 Teile eines Rotpigments (Pigment red 101) unter Rühren hinzugegeben, um 29 Teile D1 und 4,5 Teile Wasser ergänzt und auf einer Perlmühle dispergiert. Das Mahlgut wird anschließend mit 3,7 Teilen Wasser, 5 Teilen D1 und 0,5 Teilen eines handelsüblichen oberflächenaktiven Additivs (BYK 345) komplettiert und filtriert. Die rote Basisfarbe 3 hat einen VOC von 205 g/L.

### 2.7 Weiße Basisfarbe

Einer Mischung von 10,55 D2, 20 Teilen D1, 4 Teilen Butylglykol, 0,9 Teilen Netzmittels (BYK 199), 0,45 Teilen eines silanmodifizierten Siliziumdioxids (Aerosil R805), 1,2 Teilen einer 10%igen N,N'-Dimethylethanolamin-Lösung und 9,4 Teilen Wasser werden unter intensivem Rühren 48,5 Teile Titandioxid des Rutiltyps zugesetzt. Diese Mischung wird bei hoher Rührgeschwindigkeit dissolvert und auf einer Perlmühle dispergiert. Anschließend wird diese Dispersion mit zusätzlichen 5 Teilen D1 komplettiert. Die weiße Basisfarbe weist einen VOC von 231 g/L auf.

### 2.8 Gelbe Basisfarbe

Zu 13 Teilen D2, 19 Teilen Wasser, 1,5 Teilen Butylglykol, 0,5 Teilen eines handelsüblichen Netzmittels (BYK 345) und 0,5 Teilen eines handelsüblichen Dispergiermittels (Disperbyk 199) werden unter starkem Rühren 34 Teile Gelbpigment (Pigment Yellow 184) und 25 Teile D1 zugegeben. Diese Mischung wird auf der Perlmühle dispergiert, mit weiteren 2,5 Teilen Wasser, 3 Teilen D1 und 1 Teil eines PUR-Verdickers (Acrysol RM8) komplettiert und anschließend filtriert. Die gelbe Basisfarbe weist einen VOC von 220 g/L auf.

### 2.9 Blaue Basisfarbe

Zu einer Mischung von 23,5 Teile D2 und 10,8 Teilen Wasser werden unter starkem Rühren 0,6 Teile einer 10%igen N,N'-Dimethylethanolaminlösung und 8 Teile eines Blaupigments (Pigment Blue 15:1) gegeben und 30 min stark geschert. Anschließend werden langsam 16,4 Teile Wasser und 31 Teile D1 in die Trombe dosiert und die Mischung auf einer Perlmühle dispergiert. Mit weiteren 3 Teilen Wasser wird die Mühle gespült und mit 6,7 Teilen D1 komplettiert. Die Blaupaste hat einen VOC von 228,4 g/L.

### 3. Herstellung der pigmentfreien Komponente B:

20 Teile D4 und 30 Teile Polyurethandispersion D1 werden unter Rühren mit 1,6 Teilen einer 52%igen TMDD-Lösung in Butylglykol, 2,5 Teilen Butylglykol, 2,5 Teilen 1-n-Pentanol, 1 Teil Rheovis AS 130, 7,5 Teilen D3 und 24,8 Teilen D5 versetzt und mit 10 Teilen einer 12%igen wässrigen Dispersion einer amorphen Kieselsäure (Syloid ED3) versetzt. Die homogene Mischung wird anschließend filtriert. Die resultierende pigmentfreie Komponente B hat einen VOC von 215 g/L.

### 4. Herstellung der Komponente C:

1,5 Gew.-% eines Schichtsilikats (Laponite RD) werden mit 0,18 Gew.-% eines Biozids (Acticide MBR1) und 1 Gew.-% Polypropylenglykol (Pluriol P900, erhältlich von der Firma BASF SE) in deionisiertem Wasser dispergiert.

### 5. Herstellung erfindungsgemäßer wässrigen Überzugsmittel

Das wässrige Überzugsmittel entsteht durch Vermischen von wässriger Pigmentpaste A, pigmentfreier Komponente B sowie Komponente C.

### 5.1 Roter Basislack (R1)

50 g Komponente B werden mit 22,62 g roter Basisfarbe 1, 16,75 g roter Basisfarbe 2, 10,52 g roter Basisfarbe 3 und 0,1 g weißer Basisfarbe vermischt und so gerührt, dass eine homogene Mischung entsteht. Diese wird mit Komponente C volumetrisch im Verhältnis 2 : 1 aufgefüllt. Das wässrige Überzugsmittel weist einen VOC von 212 g/L auf.

### 5.2 Schwarzer Basislack (S1)

50 g Komponente B werden mit 50 g schwarzer Basisfarbe 1 verrührt bis eine homogene Mischung entsteht. Diese wird mit Komponente C volumetrisch im Verhältnis 2 : 1 aufgefüllt. Das wässrige Überzugsmittel weist einen VOC von 204 g/L auf

### 5.3 Weißer Basislack (W1)

44,47 g Komponente B werden mit 55,34 g weißer Basisfarbe, 0,09 g roter Basisfarbe 3, 0,08 g gelber Basisfarbe und 0,03 schwarzer Basisfarbe 2 vermischt und so gerührt, dass eine homogene Mischung entsteht. Diese wird mit Komponente C volumetrisch im Verhältnis 2 : 1 aufgefüllt. Das wässrige Überzugsmittel weist einen VOC von 216 g/L auf.

### 6. Lagerstabilität

Die Lagerung der wässrigen Pigmentpasten A bei Raumtemperatur und bei 40 °C über 8 Wochen zeigt keine Veränderungen bezüglich Zusammensetzung, Fließverhalten und Koloristik des applizierten getrockneten Films.

### 7. Gefrier-Tau-Stabilität

Eine Beurteilung der Gefrier-Tau-Stabilität erfolgte gemäß der vorstehend beschriebenen Methode. Die Ergebnisse sind in der Tabelle 1 zusammengefasst.

**Tabelle 1 (Viskositäten in mPa*s)**

| Pigmentpaste A | | Start | 4 Gefrier-Tau-Zyklen |
|---|---|---|---|
| Schwarze Basisfarbe 2 | pH | 8,41 | 8,46 |
| | Absetzen | - | nein |
| | Viskosität 10 s⁻¹ | 1028 | 1064 |
| | Viskosität 100 s⁻¹ | 835 | 848 |
| | Viskosität 1000 s⁻¹ | 440 | 453 |
| Schwarze Basisfarbe 1 | pH | 8,55 | 8,65 |
| | Absetzen | - | nein |
| | Viskosität 10 s⁻¹ | 872 | 1116 |
| | Viskosität 100 s⁻¹ | 721 | 871 |
| | Viskosität 1000 s⁻¹ | 364 | 409 |
| Rote Basisfarbe 1 | pH | 7,45 | 7,66 |
| | Absetzen | - | nein |
| | Viskosität 10 s⁻¹ | 1205 | 1807 |
| | Viskosität 100 s⁻¹ | 579 | 566 |
| | Viskosität 1000 s⁻¹ | 253 | 233 |
| Weiße Basisfarbe | pH | 7,40 | 7,64 |
| | Absetzen | - | nein |
| | Viskosität 10 s⁻¹ | 4352 | 4369 |
| | Viskosität 100 s⁻¹ | 2935 | 2940 |
| | Viskosität 1000 s⁻¹ | 1412 | 1429 |
| Blaue Basisfarbe | pH | 7,77 | 7,75 |
| | Absetzen | - | nein |
| | Viskosität 10 s⁻¹ | 834 | 1111 |
| | Viskosität 100 s⁻¹ | 606 | 671 |
| | Viskosität 1000 s⁻¹ | 303 | 312 |

Die mehrfach eingefrorenen und aufgetauten wässrigen Pigmentpasten zeigen kein auffälliges Absetzverhalten und auch der pH-Wert bleibt nahezu unverändert. Zudem liegt die Änderung der Viskosität selbst nach 4 Gefrier-Tau-Zyklen im tolerablen Bereich. Die in dem erfindungsgemäßen Mischsystem eingesetzten wässrigen Pigmentpasten weisen daher eine gute Gefrier-Tau-Stabilität auf.

### 8. Bewertung von Witterungsbeständigkeit und Steinschlag

Eine Beurteilung der Schwitzwasserempfindlichkeit sowie der Steinschlaghaftung erfolgte gemäß vorstehend beschriebenen Methoden. Die Ergebnisse sind in den Tabellen 2 und 3 zusammengefasst. Als Vergleich wird ein kommerziell erhältliches Mischsystem der Firma BASF Coatings GmbH (Glasurit^{®} Reihe 90) verwendet, um die entsprechenden Farbtöne herzustellen. Die VOC-Gehalte der mit diesem System (Glasurit^{®} Reihe 90) erhältlichen Überzugsmittel liegen bei 312 bis 419 g/L.

**Tabelle 2**

| | *KK 240h (DIN EN ISO 6220-2)* | | | | | | | | | |
|---|---|---|---|---|---|---|---|---|---|---|
| | *Gitterschnitt* | | | | | | *Blasengrad* | | | |
| | *vor Belastung* | | *1 h nach Belastung* | | *24 h nach Belastung* | | *Menge nach 1 h* | | *Größe nach 1 h* | |
| | ***EF**** | ***R90*** | ***EF**** | ***R90*** | ***EF**** | ***R90*** | ***EF**** | ***R90*** | ***EF**** | ***R90*** |
| ***Rot R1*** | *1* | *4* | *1* | *1* | *1* | *1* | *0* | *1* | *0* | *1* |
| ***Schwarz S1*** | *1* | *1* | *1* | *1* | *1* | *1* | *1* | *1* | *1* | *1* |
| ***Weiß W1*** | *1* | *1* | *1* | *1* | *1* | *1* | *1* | *1* | *1* | *1* |

| | | | | | | | | | | |
|---|---|---|---|---|---|---|---|---|---|---|
| * erfindungsgemäß | | | | | | | | | | |

**Tabelle 3**

| | *Multischlag DIN 20567-1* | | *HPT DIN ISO 16925* | |
|---|---|---|---|---|
| | *Note* | | *Note* | |
| | ***EF**** | ***R90*** | ***EF**** | ***R90*** |
| ***Rot R1*** | *2,0* | *2,0* | *D0* | *D1* |
| ***Schwarz S1*** | *2,0* | *2,0* | *D3* | *D3* |
| ***Weiß W1*** | *2,0* | *2,0* | *D3* | *D3* |

| | | | | |
|---|---|---|---|---|
| * erfindungsgemäß | | | | |

Aus den vorstehenden Tabellen geht hervor, dass die aus dem erfindungsgemäßen Mischsystem hergestellten wässrigen Überzugsmittel (EF) gleichgute mechanische Eigenschaften aufweisen wie Überzugsmittel (R90), welche unter Verwendung eines kommerziell erhältlichen Mischsystems hergestellt wurden. Jedoch weisen die aus dem erfindungsgemäßen Mischsystem herstellten wässrigen Überzugsmittel einen deutlich verringerten VOC-Gehalt auf.

## Patentansprüche

1. Mischsystem zur Herstellung von wässrigen Überzugsmitteln, enthaltend
(a) mindestens eine wässrige Pigmentpaste A, umfassend mindestens ein Farbpigment (a-1) sowie mindestens ein anionisch stabilisiertes Bindemittel (a-2) und/oder mindestens ein nichtionisch stabilisiertes Bindemittel (a-3) und
(b) mindestens eine pigmentfreie Komponente B, umfassend mindestens eine acrylatbasierte Mikrogel-Dispersion (b-1), wobei das acrylatbasierte Mikrogel eine Glasübergangstemperatur T_{g} von 50 bis 60°C aufweist,
wobei die wässrige Pigmentpaste A und die pigmentfreie Komponente B jeweils einen VOC-Wert von kleiner oder gleich 250 g/L aufweisen.

2. Mischsystem nach Anspruch 1, **dadurch gekennzeichnet, dass** das anionisch stabilisierte Bindemittel (a-2) der Pigmentpaste A ein in Wasser dispergiertes anionisch stabilisiertes Polyurethanpolymer ist, wobei das anionisch stabilisierte Polyurethanpolymer eine Säurezahl von 20 bis 40 mg KOH/g, bezogen auf den Feststoffgehalt, aufweist, wobei die Dispersion einen pH-Wert von 7,0 bis 8,0 aufweist und wobei die Dispersion ein Polyol, insbesondere Polypropylenglycol, mit einer mittleren Molmasse von 500 bis 1500 Da enthält.

3. Mischsystem nach einem der Ansprüche 1 oder 2, **dadurch gekennzeichnet, dass** das nichtionisch stabilisierte Bindemittel (a-3) der Pigmentpaste A ein in Wasser dispergiertes nichtionisch stabilisiertes Acrylatcopolymer ist, wobei das nichtionisch stabilisierte Acrylatcopolymer erhältlich ist durch Umsetzung von
(I) mindestens einer Ankergruppen-Monomereinheit mit wenigstens einer ionisierbaren funktionellen Gruppe, einer funktionellen Gruppe mit aktivem Wasserstoff oder deren Kombination, wobei
- die ionisierbare Funktionalität verschieden ist von einer Carbonsäuregruppe, bei welcher der Carbonyl-Kohlenstoff von dem nächstgelegenen ethylenisch nichtgesättigten Kohlenstoff um wenigstens vier Atome getrennt ist,
- die Ankergruppen-Monomereinheiten (a) keine Polyoxyalkylengruppen aufweisen und
- eine der Ankergruppen-Monomereinheiten copolymerisiertes 1-(2-Methacryloyloxyethyl)-2-imidazolidinon ist;
(II) 5 Gew.-% bis 45 Gew.-%, bezogen auf das Gesamtgewicht der Monomere, mindestens einer Monomereinheit, umfassend eine Polyoxyalkylengruppe, eine gamma-Hydroxycarbamatgruppe, eine beta-Hydroxycarbamatgruppe und deren Kombination; und
(III) 1 bis 50 Gewichtprozent, bezogen auf das Gesamtgewicht der Monomere, mindestens einer aromatischen Monomereinheit.

4. Mischsystem nach einem der vorangehenden Ansprüche, **dadurch gekennzeichnet, dass** die mindestens eine Pigmentpaste A ein Gewichtsverhältnis der Gesamtmenge an nichtionisch stabilisiertem Bindemittel (a-3) zu der Gesamtmenge an anionisch stabilisiertem Bindemittel (a-2) von 0,1 bis 3, insbesondere von 0,25 bis 1,5, jeweils bezogen auf den Feststoffgehalt der Bindemittel, aufweist.

5. Mischsystem nach einem der vorangehenden Ansprüche, **dadurch gekennzeichnet, dass** die mindestens eine Pigmentpaste A organisches Lösungsmittel in einer Gesamtmenge von 0 bis 10 Gew.-%, vorzugsweise von 0 bis 9,8 Gew.-%, insbesondere von 0 bis 9,5 Gew.-%, jeweils bezogen auf das Gesamtgewicht der wässrigen Pigmentpaste A, enthält.

6. Mischsystem nach einem der vorangehenden Ansprüche, **dadurch gekennzeichnet, dass** die acrylatbasierte Mikrogel-Dispersion (b-1) einen Gelanteil von 80 bis 100 %, vorzugsweise von 85 bis 100 %, bevorzugt von 88 bis 98 %, insbesondere von 90 bis 98 %, jeweils bezogen auf den Festkörper der Dispersion, aufweist.

7. Mischsystem nach einem der vorangehenden Ansprüche, **dadurch gekennzeichnet, dass** die acrylatbasierte Mikrogel-Dispersion (b-1) erhältlich ist durch radikalische Emulsionspolymerisation, insbesondere einstufige radikalische Emulsionspolymerisation, von
(i) 60 bis 70 Gew.-%, bezogen auf das Gesamtgewicht der Monomere (i) und (ii), eines ersten Monomers, welches mindestens zwei Alkenylgruppen aufweist, insbesondere 1,6-Hexandioldiacrylat, und
(ii)einer Mischung aus 10 bis 90 Gew.-% C₁-C₁₀-Hydroxyalkyl(meth)acrylat, insbesondere Hydroxypropylmethacrylat, und 10 bis 90 Gew.-%, jeweils bezogen auf das Gesamtgewicht der Monomere (i) und (ii), C₁-C₁₀-Alkyl(meth)acrylat, insbesondere Methylmethacrylat.

8. Mischsystem nach einem der vorangehenden Ansprüche, **dadurch gekennzeichnet, dass** die pigmentfreie Komponente B die acrylatbasierte Mikrogel-Dispersion (b-1) in einer Gesamtmenge von 1 bis 15 Gew.-%, vorzugsweise von 5 bis 12 Gew.-%, insbesondere von 6 bis 9 Gew.-%, jeweils bezogen auf das Gesamtgewicht der pigmentfreien Komponente B, enthält.

9. Mischsystem nach einem der vorangehenden Ansprüche, **dadurch gekennzeichnet, dass** die pigmentfreie Komponente B als anionisch stabilisiertes Bindemittel (b-2b) mindestens ein in Wasser dispergiertes anionisch stabilisiertes Polymerisat mit einer Teilchengröße von 100 bis 500 nm enthält, wobei die Herstellung der des Polymerisats die aufeinanderfolgende radikalische Emulsionspolymerisation von drei Mischungen (A), (B) und (C) von olefinisch ungesättigten Monomeren umfasst, wobei
- die Mischung (A) mindestens 50 Gew.-% von vinylaromatischen Monomeren enthält und ein Polymer, welches aus der Mischung (A) hergestellt wird, eine Glasübergangstemperatur von 10 bis 65°C besitzt,
- die Mischung (B) mindestens ein mehrfach ungesättigtes Monomer enthält und ein Polymer, welches aus der Mischung (B) hergestellt wird, eine Glasübergangstemperatur von -35 bis 15°C besitzt, und
- die Mischung (C) mindestens ein anionisches Monomer enthält und ein Polymer, welches aus der Mischung (C) hergestellt wird, eine Glasübergangstemperatur von -50 bis 15°C besitzt,
und wobei
i. zunächst die Mischung (A) polymerisiert wird,
ii. dann die Mischung (B) in Gegenwart des unter i. hergestellten Polymerisats polymerisiert wird, und
iii. danach die Mischung (C) in Gegenwart des unter ii. hergestellten Polymerisats polymerisiert wird.

10. Mischsystem nach einem der vorangehenden Ansprüche, **dadurch gekennzeichnet, dass** die pigmentfreie Komponente B als anionisch stabilisiertes Bindemittel (b-2c) mindestens ein in Wasser dispergiertes anionisch stabilisiertes Polyurethan-Poly(meth)acrylat-Hybridpolymer enthält, wobei das Hybridpolymer erhältlich ist durch radikalische Umsetzung
- eines nichtionischen Polyurethanpolymers mit einem zahlenmittleren Molekulargewicht von 1000 bis 30.000 Da und im statischen Mittel pro Molekül 0,05 bis 1,1 polymerisierbare Doppelbindungen enthält, und
- mindestens einem ethylenisch ungesättigten Monomer mit mindestens einer Carbonsäuregruppe
in Gegenwart mindestens eines wasserunlöslichen Initiators,
wobei das Gewichtsverhältnis zwischen nichtionischen Polyurethanpolymer und dem mindestens einen ethylenisch ungesättigten Monomer von 1 : 10 bis 10 : 1 beträgt.

11. Mischsystem nach einem der vorangehenden Ansprüche, **dadurch gekennzeichnet, dass** die wässrige Pigmentpaste A und die pigmentfreien Komponente B jeweils einen VOC-Gehalt von 0 bis 250 g/L, insbesondere von 100 bis 250 g/L, aufweist.

12. Mischsystem nach einem der vorangehenden Ansprüche, **dadurch gekennzeichnet, dass** das Mischsystem zusätzlich eine Komponente C umfasst, wobei die Komponente C mindestens ein Verdickungsmittel sowie 90 bis 98 Gew.-% Wasser, bezogen auf das Gesamtgewicht der Komponente C, enthält.

13. Verfahren zur Herstellung von wässrigen Überzugsmitteln mit einem VOC-Gehalt von 0 bis 250 g/L, insbesondere von 100 bis 250 g/L, durch Vermischen von mindestens zwei wässrigen Komponenten, **dadurch gekennzeichnet, dass** ein Mischsystem nach einem der Ansprüche 1 bis 12 eingesetzt wird und die wässrigen Überzugsmittel durch Mischen der Pigmentpaste A mit der pigmentfreien Komponente B und gegebenenfalls der Komponente C hergestellt werden.

14. Verfahren nach Anspruch 13, **dadurch gekennzeichnet, dass** das wässrige Überzugsmittel organische Lösungsmittel in einer Gesamtmenge von 0 bis 7 Gew.-%, insbesondere von 0 bis 6 Gew.-%, jeweils bezogen auf das Gesamtgewicht des Überzugsmittels, enthält.

15. Verwendung eines Mischsystems nach einem der Ansprüche 1 bis 12 zur Herstellung von wässrigen Überzugsmitteln für die Reparaturlackierung und/oder für die Beschichtung von Automobilkarossen und/oder Kunststoffteilen.

## Claims

1. Mixer system for producing aqueous coating materials, comprising
(a) at least one aqueous pigment paste A comprising at least one color pigment (a-1) and also at least one anionically stabilized binder (a-2) and/or at least one nonionically stabilized binder (a-3), and
(b) at least one pigment-free component B comprising at least one acrylate-based microgel dispersion (b-1), the acrylate-based microgel having a glass transition temperature T_{g} of 50 to 60°C,
where the aqueous pigment paste A and the pigment-free component B each have a VOC value of less than or equal to 250 g/L.

2. Mixer system according to Claim 1, **characterized in that** the anionically stabilized binder (a-2) of the pigment paste A is an anionically stabilized polyurethane polymer in dispersion in water, where the anionically stabilized polyurethane polymer has an acid number of 20 to 40 mg KOH/g, based on the solids content, where the dispersion has a pH of 7.0 to 8.0, and where the dispersion comprises a polyol, more particularly polypropylene glycol, having an average molar mass of 500 to 1500 Da.

3. Mixer system according to either of Claims 1 and 2, **characterized in that** the nonionically stabilized binder (a-3) of the pigment paste A is a nonionically stabilized acrylate copolymer in dispersion in water, the nonionically stabilized acrylate copolymer being obtainable by reaction of
(I) at least one anchor group monomer unit having at least one ionizable functional group, a functional group with active hydrogen, or a combination thereof, where
- the ionizable functionality is other than a carboxylic acid group in which the carbonyl carbon is separated from the closest ethylenically unsaturated carbon by at least four atoms,
- the anchor group monomer units (a) contain no polyoxyalkylene groups, and
- one of the anchor group monomer units is copolymerized 1-(2-methacryloyloxyethyl)-2-imidazolidinone;
(II) 5 wt% to 45 wt%, based on the total weight of the monomers, of at least one monomer unit comprising a polyoxyalkylene group, a gamma-hydroxycarbamate group, a beta-hydroxycarbamate group, and a combination thereof; and
(III) 1 to 50 weight percent, based on the total weight of the monomers, of at least one aromatic monomer unit.

4. Mixer system according to any of the preceding claims, **characterized in that** the at least one pigment paste A has a weight ratio of the total amount of nonionically stabilized binder (a-3) to the total amount of anionically stabilized binder (a-2) of 0.1 to 3, more particularly of 0.25 to 1.5, based in each case on the solids content of the binders.

5. Mixer system according to any of the preceding claims, **characterized in that** the at least one pigment paste A comprises organic solvent in a total amount of 0 to 10 wt%, preferably of 0 to 9.8 wt%, more particularly of 0 to 9.5 wt%, based in each case on the total weight of the aqueous pigment paste A.

6. Mixer system according to any of the preceding claims, **characterized in that** the acrylate-based microgel dispersion (b-1) has a gel fraction of 80% to 100%, preferably of 85% to 100%, more preferably of 88% to 98%, more particularly of 90% to 98%, based in each case on the solids content of the dispersion.

7. Mixer system according to any of the preceding claims, **characterized in that** the acrylate-based microgel dispersion (b-1) is obtainable by radical emulsion polymerization, more particularly single-stage radical emulsion polymerization, of
(i) 60 to 70 wt%, based on the total weight of the monomers (i) and (ii), of a first monomer which contains at least two alkenyl groups, more particularly 1,6-hexanediol diacrylate, and
(ii) a mixture of 10 to 90 wt% of C₁-C₁₀ hydroxyalkyl (meth)acrylate, more particularly hydroxypropyl methacrylate, and 10 to 90 wt%, based in each case on the total weight of the monomers (i) and (ii), of C₁-C₁₀ alkyl (meth)acrylate, more particularly methyl methacrylate.

8. Mixer system according to any of the preceding claims, **characterized in that** the pigment-free component B comprises the acrylate-based microgel dispersion (b-1) in a total amount of 1 to 15 wt%, preferably of 5 to 12 wt%, more particularly of 6 to 9 wt%, based in each case on the total weight of the pigment-free component B.

9. Mixer system according to any of the preceding claims, **characterized in that** as anionically stabilized binder (b-2b) the pigment-free component B comprises at least one anionically stabilized polymer in dispersion in water and having a particle size of 100 to 500 nm, where the preparation of the polymer comprises the successive radical emulsion polymerization of three mixtures (A), (B), and (C) of olefinically unsaturated monomers, where
- the mixture (A) comprises at least 50 wt% of vinylaromatic monomers, and a polymer prepared from the mixture (A) possesses a glass transition temperature of 10 to 65°C,
- the mixture (B) comprises at least one polyunsaturated monomer, and a polymer prepared from the mixture (B) possesses a glass transition temperature of
- 35 to 15°C, and
- the mixture (C) comprises at least one anionic monomer, and a polymer prepared from the mixture (C) possesses a glass transition temperature of -50 to 15°C,
and where
i. first the mixture (A) is polymerized,
ii. then the mixture (B) is polymerized in the presence of the polymer prepared under i., and
iii. thereafter the mixture (C) is polymerized in the presence of the polymer prepared under ii.

10. Mixer system according to any of the preceding claims, **characterized in that** as anionically stabilized binder (b-2c) the pigment-free component B comprises at least one anionically stabilized polyurethane-poly (meth) acrylate hybrid polymer in dispersion in water, where the hybrid polymer is obtainable by radical reaction of
- a nonionic polyurethane polymer having a number-average molecular weight of 1000 to 30 000 Da and containing on average per molecule 0.05 to 1.1 polymerizable double bonds, and
- at least one ethylenically unsaturated monomer having at least one carboxylic acid group in the presence of at least one water-insoluble initiator,
where the weight ratio between nonionic polyurethane polymer and the at least one ethylenically unsaturated monomer is from 1 : 10 to 10 : 1.

11. Mixer system according to any of the preceding claims, **characterized in that** the aqueous pigment paste A and the pigment-free component B each have a VOC content of 0 to 250 g/L, more particularly of 100 to 250 g/L.

12. Mixer system according to any of the preceding claims, **characterized in that** the mixer system further comprises a component C, the component C comprising at least one thickener and also 90 to 98 wt% of water, based on the total weight of component C.

13. Method for producing aqueous coating materials having a VOC content of 0 to 250 g/L, more particularly of 100 to 250 g/L, by mixing at least two aqueous components, **characterized in that** a mixer system according to any of Claims 1 to 12 is used and the aqueous coating materials are produced by mixing the pigment paste A with the pigment-free component B and, optionally, with the component C.

14. Method according to Claim 13, **characterized in that** the aqueous coating material comprises organic solvents in a total amount of 0 to 7 wt%, more particularly of 0 to 6 wt%, based in each case on the total weight of the coating material.

15. Use of a mixer system according to any of Claims 1 to 12 for producing aqueous coating materials for refinishing and/or for the coating of automobile bodies and/or plastics parts.

## Revendications

1. Système mixte pour la préparation d'agents de revêtement aqueux, contenant
(a) au moins une pâte pigmentaire aqueuse A, comprenant au moins un pigment coloré (a-1) ainsi qu'au moins un liant stabilisé de manière anionique (a-2) et/ou au moins un liant stabilisé de manière non ionique (a-3) et
(b) au moins un composant B exempt de pigment, comprenant au moins une dispersion de microgel à base d'acrylate (b-1), le microgel à base d'acrylate présentant une température de transition vitreuse T_{g} de 50 à 60°C,
la pâte pigmentaire aqueuse A et le composant B exempt de pigment présentant à chaque fois une valeur COV inférieure ou égale à 250 g/l.

2. Système mixte selon la revendication 1, **caractérisé en ce que** le liant stabilisé de manière anionique (a-2) de la pâte pigmentaire A est un polymère de polyuréthane stabilisé de manière anionique dispersé dans l'eau, le polymère de polyuréthane stabilisé de manière anionique présentant un indice d'acide de 20 à 40 mg de KOH/g, par rapport à la teneur en solides, la dispersion présentant un pH de 7,0 à 8,0 et la dispersion contenant un polyol, en particulier un polypropylèneglycol présentant une masse molaire moyenne de 500 à 1500 Da.

3. Système mixte selon l'une quelconque des revendications 1 ou 2, **caractérisé en ce que** le liant stabilisé de manière non ionique (a-3) de la pâte pigmentaire A est un copolymère d'acrylate stabilisé de manière non ionique dispersé dans l'eau, le copolymère d'acrylate stabilisé de manière non ionique pouvant être obtenu par transformation de
(I) au moins un motif monomère à groupes d'ancrage, présentant au moins un groupe fonctionnel ionisable, un groupe fonctionnel présentant de l'hydrogène actif ou leur combinaison,
- la fonctionnalité ionisable étant différente d'un groupe acide carboxylique dans lequel le carbone à fonction carbonyle est séparé du carbone éthyléniquement non saturé le plus proche par au moins quatre atomes,
- les motifs monomères à groupes d'ancrage (a) ne présentant pas de groupes polyoxyalkylène et
- l'un des motifs monomères à groupes d'ancrage étant de la 1-(2-méthacryloyloxyéthyl)-2-imidazolidinone copolymérisée ;
(II) 5% en poids à 45% en poids, par rapport au poids total des monomères, d'au moins un motif monomère comprenant un groupe polyoxyalkylène, un groupe gamma-hydroxycarbamate, un groupe bêta-hydroxycarbamate et leur combinaison ; et
(III) 1 à 50% en poids, par rapport au poids total des monomères, d'au moins un motif monomère aromatique.

4. Système mixte selon l'une quelconque des revendications précédentes, **caractérisé en ce que** ladite au moins une pâte pigmentaire A présente un rapport en poids de la quantité totale de liant stabilisé de manière non ionique (a-3) à la quantité totale de liant stabilisé de manière anionique (a-2) de 0,1 à 3, en particulier de 0,25 à 1,5, à chaque fois par rapport à la teneur en solides du liant.

5. Système mixte selon l'une quelconque des revendications précédentes, **caractérisé en ce que** ladite au moins une pâte pigmentaire A contient des solvants organiques en une quantité totale de 0 à 10% en poids, de préférence de 0 à 9,8% en poids, en particulier de 0 à 9,5% en poids, à chaque fois par rapport au poids total de la pâte pigmentaire aqueuse A.

6. Système mixte selon l'une quelconque des revendications précédentes, **caractérisé en ce que** la dispersion de microgel à base d'acrylate (b-1) présente une proportion de gel de 80 à 100%, préférablement de 85 à 100%, de préférence de 88 à 98%, en particulier de 90 à 98%, à chaque fois par rapport aux solides de la dispersion.

7. Système mixte selon l'une quelconque des revendications précédentes, **caractérisé en ce que** la dispersion de microgel à base d'acrylate (b-1) peut être obtenue par polymérisation radicalaire en émulsion, en particulier par polymérisation radicalaire en une étape en émulsion, de
(i) 60 à 70% en poids, par rapport au poids total des monomères (i) et (ii), d'un premier monomère, qui présente au moins deux groupes alcényle, en particulier le diacrylate de 1,6-hexanediol, et
(ii) un mélange de 10 à 90% en poids de (méth)acrylate de C₁-C₁₀-hydroxyalkyle, en particulier de méthacrylate d'hydroxypropyle, et de 10 à 90% en poids, à chaque fois par rapport au poids total des monomères (i) et (ii), de (méth)acrylate de C₁-C₁₀-alkyle, en particulier de méthacrylate de méthyle.

8. Système mixte selon l'une quelconque des revendications précédentes, **caractérisé en ce que** le composant B exempt de pigment contient la dispersion de microgel à base d'acrylate (b-1) en une quantité totale de 1 à 15% en poids, de préférence de 5 à 12% en poids, en particulier de 6 à 9% en poids, à chaque fois par rapport au poids total du composant B exempt de pigment.

9. Système mixte selon l'une quelconque des revendications précédentes, **caractérisé en ce que** le composant B exempt de pigment contient, comme liant stabilisé de manière anionique (b-2b), au moins un polymère stabilisé de manière anionique dispersé dans l'eau présentant une grosseur de particule de 100 à 500 nm, la préparation du polymère comprenant la polymérisation radicalaire en émulsion successive de trois mélanges (A), (B) et (C) de monomères oléfiniquement insaturés,
- le mélange (A) contenant au moins 50% en poids de monomères aromatiques de vinyle et un polymère qui est préparé à partir du mélange (A) présentant une température de transition vitreuse de 10 à 65°C,
- le mélange (B) contenant un monomère polyinsaturé et un polymère qui est préparé à partir du mélange (B) présentant une température de transition vitreuse de -35 à 15°C et
- le mélange (C) contenant au moins un monomère anionique et un polymère qui est préparé à partir du mélange (C) présentant une température de transition vitreuse de -50 à 15°C,
et
i. le mélange (A) étant d'abord polymérisé,
ii. ensuite, le mélange (B) étant polymérisé en présence du polymère préparé sous i. et
iii. ensuite, le mélange (C) étant polymérisé en présence du polymère préparé sous ii.

10. Système mixte selon l'une quelconque des revendications précédentes, **caractérisé en ce que** le composant B exempt de pigment contient, comme liant stabilisé de manière anionique (b-2c), au moins un polymère hybride de polyuréthane-poly(méth)acrylate stabilisé de manière anionique dispersé dans l'eau, le polymère hybride pouvant être obtenu par transformation radicalaire de
- un polymère de polyuréthane non ionique présentant un poids moléculaire moyen en nombre de 1000 à 30.000 Da et, en moyenne statistique, par molécule, 0,05 à 1,1 double liaison polymérisable et
- au moins un monomère éthyléniquement insaturé présentant au moins un groupe acide carboxylique en présence d'au moins un initiateur insoluble dans l'eau, le rapport pondéral entre le polymère de polyuréthane non ionique et ledit au moins un monomère éthyléniquement insaturé valant 1:10 à 10:1.

11. Système mixte selon l'une quelconque des revendications précédentes, **caractérisé en ce que** la pâte pigmentaire aqueuse A et le composant B exempt de pigment présentent à chaque fois une teneur en COV de 0 à 250 g/l, en particulier de 100 à 250 g/l.

12. Système mixte selon l'une quelconque des revendications précédentes, **caractérisé en ce que** le système mixte comprend en outre un composant C, le composant C contenant au moins un épaississant ainsi que 90 à 98% d'eau, par rapport au poids total du composant C.

13. Procédé pour la préparation d'agents de revêtement aqueux présentant une teneur en COV de 0 à 250 g/l, en particulier de 100 à 250 g/l, par mélange d'au moins deux composants aqueux, **caractérisé en ce qu'**un système mixte selon l'une quelconque des revendications 1 à 12 est utilisé et les agents de revêtement aqueux sont préparés par mélange de la pâte pigmentaire A avec le composant B exempt de pigment et le cas échéant le composant C.

14. Procédé selon la revendication 13, **caractérisé en ce que** l'agent de revêtement aqueux contient des solvants organiques en une quantité totale de 0 à 7% en poids, en particulier de 0 à 6% en poids, à chaque fois par rapport au poids total de l'agent de revêtement.

15. Utilisation d'un système mixte selon l'une quelconque des revendications 1 à 12 pour la préparation d'agents de revêtement aqueux pour le laquage de réparation et/ou pour le revêtement de carrosseries automobiles et/ou de pièces en matériau synthétique.
